# EUROPÄISCHE PATENTSCHRIFT

(11) **EP 3 408 056 B1**
(45) Veröffentlichungstag und Bekanntmachung des Hinweises auf die Patenterteilung: **16.12.2020**
(21) Anmeldenummer: 17700910.7
(22) Anmeldetag: 06.01.2017
(51) Int. Cl.: B25B 27/02, B25F 5/00, B25B 27/10

(54) **VERFAHREN ZUM BETRIEB EINES ARBEITSGERÄTES UND ARBEITSGERÄT**
METHOD FOR OPERATING A WORKING DEVICE, AND WORKING DEVICE
PROCÉDÉ PERMETTANT DE FAIRE FONCTIONNER UN OUTIL DE TRAVAIL ET OUTIL DE TRAVAIL

(30) Priorität: 28.01.2016 DE 102016101540; 14.09.2016 DE 102016117313
(43) Veröffentlichungstag der Anmeldung: 05.12.2018
(73) Patentinhaber: Gustav Klauke GmbH, 42855 Remscheid (DE)
(72) Erfinder: FRENKEN, Egbert, 52525 Heinsberg (DE)
(74) Vertreter: Müller, Enno
(86) Internationale Anmeldenummer: PCT/EP2017/050261
(87) Internationale Veröffentlichungsnummer: WO 2017/129385

(56) Entgegenhaltungen:
- WO-A1-2016/005838
- DE-A1-102008 024 018
- DE-A1-102011 011 742

## Beschreibung

### Gebiet der Technik

Die Erfindung betrifft ein Verfahren zum Betrieb eines motorisch betätigten Arbeitsgerätes und ein motorisch betätigbares Arbeitsgerät, wobei ein bestimmter Arbeitsvorgang einen Anstieg einer aufgebrachten Kraft auf eine bestimmte Arbeitskraft erfordert, nach deren Erreichen der bestimmte Arbeitsvorgang keine höhere Kraft mehr erfordert und sich eine charakteristische Änderung bei einem Gerätewert wie einem Motorstrom oder einem Druckanstieg in einem zur Aufbringung der Kraft genutzten Hydraulikmittel ergibt, wobei weiter das Arbeitsgerät einen Anstieg der Kraft auf eine die bestimmte Arbeitskraft übersteigende allgemeine Arbeitskraft ermöglicht und eine Einrichtung zur Überwachung des Gerätewertes vorgesehen ist, wobei weiter bei dem bestimmten Arbeitsvorgang eine Auswertung im Hinblick auf eine Erfassung der charakteristischen Änderung bei einem Erreichen der bestimmten Arbeitskraft vornehmbar ist und das Erfassen der charakteristischen Änderung als Signal zur Beendigung des bestimmten Arbeitsvorganges nach Erreichen der bestimmten Arbeitskraft, aber vor Erreichen der allgemeinen Arbeitskraft nutzbar ist.

Das motorisch betätigbare Arbeitsgerät ist nach einer Ausführungsform ein motorisch betätigbares Schneidgerät mit Scherenteilen oder ein motorisch betätigbares Stanzgerät, bei welchem ein bestimmter Arbeitsvorgang einen Anstieg einer aufgebrachten Kraft auf eine bestimmte Arbeitskraft erfordert und nach deren Erreichen der bestimmte Arbeitsvorgang keine höhere Kraft mehr erfordert, und bei welchem sich weiter nach Erreichen der bestimmten Arbeitskraft eine charakteristische Änderung bei einem Gerätewert wie einem Motorstrom oder einem Druckanstieg in einem zur Aufbringung der Kraft genutzten Hydraulikmittel ergibt, wobei weiter das Arbeitsgerät einen Anstieg der Kraft auf eine die bestimmte Arbeitskraft übersteigende allgemeine Arbeitskraft ermöglicht und eine Einrichtung zur Überwachung des Gerätewertes vorgesehen ist.

### Stand der Technik

Derartige Verfahren und Arbeitsgeräte sind beispielsweise aus der WO 2008/138987 A2 (US 8056473) bekannt. Bei dem bekannten Verfahren wird der sich in dem Beispiel eines hydraulisch betätigten Arbeitsgerätes bei der Durchführung eines bestimmten Arbeitsvorganges ergebende Hydraulikdruck gemessen und das Erreichen eines vorgegebenen Druckes in dem Hydraulikmittel als Signal zur Beendigung eines Arbeitsvorganges genutzt. Entsprechend ergibt sich bei jedem Arbeitsvorgang ein Abbruch bei demselben vorgegebenen Druck in dem Hydraulikmittel. Es wird entsprechend auch immer dieselbe Kraft, beispielsweise an den Arbeitsbacken eines solchen Arbeitsgerätes aufgebracht. In gleicher Weise kann auch hinsichtlich eines Motorstromes vorgegangen werden. Wenn der Motorstrom einen bestimmten absoluten Wert übersteigt, kann dies als Maß dafür genommen werden, dass eine vorbestimmte, das heißt die allgemeine Arbeitskraft erreicht ist und ein Arbeitsvorgang entsprechend abgebrochen wird.

Weiter ist zum Stand der Technik auf die WO 2016/005838 A1 zu verweisen. Hieraus ist es bekannt, ein Signal abzugeben, wenn ein geschlossener Zustand der Pressbacken erreicht ist.

Ausgehend von dem dargelegten Stand der Technik beschäftigt sich die Erfindung mit der Aufgabe, ein Verfahren und hinsichtlich Verfahren und Vorrichtung eine Lehre zu geben, dass die allgemeine Arbeitskraft erreicht wurde oder ein außer Betrieb setzen aus dem Anlass des Erreichens der allgemeinen Arbeitskraft erfolgt ist oder nicht.

Diese Aufgabe ist hinsichtlich des Verfahrens bei den Ansprüchen 1, 2, 3 und 4 gelöst.

Bei dem bestimmten Arbeitsvorgang wird eine Auswertung im Hinblick auf eine Erfassung der charakteristischen Änderung vorgenommen und das Erreichen der charakteristischen Änderung als Signal zur Beendigung des bestimmten Arbeitsvorganges nach Erreichen der bestimmten Arbeitskraft aber vor Erreichen der allgemeinen Arbeitskraft genutzt und ein einfaches oder mehrfaches Erreichen der allgemeinen Arbeitskraft löst einen Hinweis für einen Benutzer und/oder ein außer Betrieb setzen des Arbeitsgerätes aus.

Es kann auch als Gerätewert eine einzelne Druckstufe einer bestimmten Höhe zur Beendigung des Arbeitsvorganges herangezogen werden oder die Beendigung des bestimmten Arbeitsvorganges sogleich beim Erfassen der charakteristischen Änderung vorgenommen werden.

Bezüglich des Verfahrens zum Betrieb eines motorisch betätigten Schneidgerätes mit Scherenteilen oder eines Stanzgerätes können nach einem Erreichen der bestimmten Arbeitskraft die Teile bis zum Erfassen der charakteristischen Änderung weiterbewegt werden oder ein Übergang zu einem zeitlich raschen Abfall der Arbeitskraft oder ein analoger Abfall des Motorstroms als charakteristische Änderung herangezogen werden.

Die Aufgabe ist hinsichtlich des motorisch betätigbaren Arbeitsgerätes bei den Ansprüchen 5, 6 und 8 sowie bezüglich des Schneidgerätes oder Stanzgerätes bei dem Anspruch 7 gelöst.

Ein ein- oder mehrfaches Erreichen der allgemeinen Arbeitskraft löst einen Hinweis für einen Benutzer aus und/oder ein außer Betrieb Setzen des Arbeitsgerätes.

Es kann auch als Gerätewert eine einzelne Druckstufe einer bestimmten Höhe zur Beendigung des Arbeitsvorganges heranziehbar sein.

Es kann auch ein Sensor zur Erfassung des Motorstroms des Elektromotors und/oder ein Sensor zur Erfassung eines Druckes in dem Hydraulikmittel vorgesehen sein, wobei der Sensor für den Motorstrom und/oder der Sensor für den hydraulischen Druck Messwerte in sehr kurzen Zeitabständen unterhalb von einer zehntel Sekunde liefert und die Beendigung des bestimmten Arbeitsvorganges sogleich beim Erfassen der charakteristischen Änderung vornehmbar ist.

Bezüglich des motorisch betätigbaren Schneidgerätes oder Stanzgerätes ist darauf abgestellt, dass nach Erreichen der bestimmten Arbeitskraft die Teile, im Falle eines Schneidgerätes die Scherenteile, bis zum Erfassen der charakteristischen Änderung weiterbewegbar sind oder dass ein Übergang zu einem zeitlich raschen Abfall der Arbeitskraft oder ein analoger Abfall des Motorstroms als charakteristische Änderung heranziehbar ist.

### Zusammenfassung der Erfindung

Erfindungsgemäß ist erkannt worden, dass sich nach Erreichen der bestimmten Arbeitskraft, aber in der Regel vor Erreichen der allgemeinen Arbeitskraft und unabhängig davon, ob die allgemeine Arbeitskraft erreicht ist oder nicht, eine charakteristische Änderung in einem oder mehreren Gerätewerten des Arbeitsgerätes ergibt und diese charakteristische Änderung für eine individuelle Beendigung des Arbeitsvorganges genutzt werden kann, ohne dass hinsichtlich der Qualität des Arbeitsvorganges, also der erwünschten Fertigstellung des Arbeitsvorganges, eine Einbuße hingenommen werden muss. Erfindungsgemäß wird eine Abänderung des Gerätewertes und nicht ein absoluter Gerätewert zur Auslösung einer Beendigung des bestimmten Arbeitsvorganges herangezogen.

Es kann sich bei einer Vielzahl von Arbeitsvorgängen auch eine Vielzahl von unterschiedlichen Drücken bzw. Kräften ergeben, bei welcher der jeweilige (bestimmte) Arbeitsvorgang beendet wird. Im Extrem kann jeder Arbeitsvorgang bei einem anderen Druck bzw. einer anderen Kraft beendet werden.

Gegenüber einem Beendigen eines Arbeitsvorganges bei Erreichen eines vorgegebenen Druckwertes in einem Hydraulikmittel, wenn ein Hydraulikmittel zur Aufbringung der Arbeitskraft genutzt wird, kann sich auch der Vorteil ergeben, dass auch in einem Fall, in welchem bei einem Erreichen des vorgegebenen Druckwertes die bestimmte Arbeitskraft noch nicht erreicht ist, auch dieser Arbeitsvorgang ohne Einbuße an Qualität des Arbeitsvorganges zum Abschluss gebracht wird. Das Gleiche gilt, wenn beispielsweise die Höhe eines Motorstromes eines Elektromotors herangezogen wird. Da bevorzugt im Rahmen der Erfindung kein Gerätewert mehr daraufhin überprüft wird, ob eine allgemeine Arbeitskraft (oder ein allgemeiner Druck) bei einem bestimmten Arbeitsvorgang erreicht wird, es mithin auch keine Überprüfung auf einen vorgegebenen Druckwert geben muss, kann es dann auch nicht zu einem Beendigen eines bestimmten Arbeitsvorganges kommen, ohne dass der Arbeitsvorgang auch qualitativ beendet wäre. Dies gilt natürlich mit der Ausnahme, dass gleichwohl eine Überwachung hinsichtlich eines maximal zulässigen Drucks oder einer maximal zulässigen Arbeitskraft durchgeführt wird und deren Überschreitung etwa zum Schutz des Arbeitsgerätes zum Abbruch des Arbeitsvorganges führt.

Der Arbeitsvorgang kann beispielsweise eine Verpressung sein. Insbesondere eine Verpressung mit einem hydraulischen Verpressgerät. Hierbei werden üblicherweise zwei Pressbacken relativ zueinander bewegt, zwischen welche Pressbacken ein zu verpressendes Teil oder eine zu verpressende Kombination von Teilen eingelegt ist. Solange das Teil oder die Teile durch das Zusammenfahren der Arbeitsbacken elastisch und/oder plastisch verformt werden, ergibt sich ein - erster - Anstieg der Arbeitskraft. Wenn die Backen zusammengefahren sind, führt eine weitere Erhöhung der Arbeitskraft praktisch nur noch zu einem "auf Block fahren" der Arbeitsbacken. Somit ist dann im Wesentlichen nur noch die Geräteeigenschaft selbst, also beispielsweise die einer oder beiden Backen innenwohnende Elastizität bzw. Steifigkeit, als Widerstand gegen den weiteren Anstieg der Arbeitskraft wirksam. Es ergibt sich hinsichtlich dieser weiteren Erhöhung ein geänderter - zweiter - Anstieg der Arbeitskraft. Der Übergang von dem ersten Anstieg zu dem zweiten Anstieg der Arbeitskraft führt zu der charakteristischen Änderung in einem Gerätewert.

Beispielsweise kann die charakteristische Änderung bei der Messung des Druckanstiegs in einem zur Erzeugung der Arbeitskraft genutzten Hydraulikmittel in einer größeren Steigung der Druckanstiegskurve bestehen. Insbesondere wenn zur Erzeugung des Drucks in dem Hydraulikmittel eine Kolbenpumpe verwendet wird, setzt sich die Druckanstiegskurve bei hoher Auflösung aus einer Abfolge von stufenartigen Teilbereichen zusammen, die nachstehend auch als Stufen angesprochen sind, und es ergeben sich unterschiedliche Stufen mit dem Anstieg des Druckes in dem Hydraulikmittel. Nach Erreichen der bestimmten Arbeitskraft, wenn keine wesentliche Aufnahme der zusätzlichen Arbeitskraft mehr in dem Pressling, das heißt in dem zu verpressenden Teil oder den zu verpressenden Teilen, erfolgt, werden die Stufen deutlich größer (höher). Vergleichbares kann man auch bei dem Motorstrom eines Elektromotors feststellen, wenn der Elektromotor zur Erzeugung der Arbeitskraft mittelbar oder unmittelbar genutzt wird. Eine mittelbare Benutzung ist beispielsweise bei einem Elektromotor als Antrieb der für die Krafterzeugung in einem Hydraulikmittel erforderlichen Pumpe gegeben. Eine unmittelbare Nutzung kann sich ergeben, wenn mit dem Elektromotor beispielsweise eine Pressbacke über ein mechanisches Getriebe unter mechanischer Ankopplung an die Motorwelle bewegt wird.

Der Arbeitsvorgang kann auch in einem Schneiden bestehen. Hierbei kann sich zunächst der Effekt ergeben, dass bei dem Erreichen der bestimmten Arbeitskraft, wenn es zum Abtrennen eines Werkstückes kommt, der Druck in dem Hydraulikmittel wieder abfällt oder der Motorstrom des Elektromotors zunächst abfällt. Ein weiteres Bewegen der Scherenteile führt aber dann auch bei einem solchen Arbeitsgerät zu einem "auf Block fahren", bei welchem also keine relevante Bewegung der Scherenteile zueinander mehr erfolgt, sondern eine zunehmende Kraft unmittelbar in einem Geräteteil selbst, insbesondere durch elastische Verformung, aufgenommen wird. Hierbei kommt es zwar nicht unmittelbar nach Vollendung des Abtrennvorganges, also der faktischen Beendigung des bestimmten Arbeitsvorganges, zu einer charakteristischen Änderung des Gerätewertes in dem Sinne, dass ein größerer Anstieg der Arbeitskraft bei Fortführung der Bewegung der Schneiden gegeben ist. Eine solche charakteristische Änderung stellt sich jedoch auch bei einem solchen Schneidevorgang ein, wenn die Scherenteile oder ein ein Scherenteil beaufschlagendes Teil "auf Block gefahren" wird. Oftmals ist dies zeitlich auch praktisch nicht wesentlich nach dem faktischen Ende des bestimmten Arbeitsvorganges gegeben. Alternativ kann aber auch ein Übergang zu einem zeitlich raschen Abfall der Arbeitskraft, wie er sich nach Vollendung der Abtrennung bei einem Schneidvorgang ergibt, als charakteristische Änderung eines Gerätewertes, oder ein analoger Abfall des Motorstromes herangezogen werden. Auch hierzu kann beispielsweise des hydraulische Druck oder ein Motorstrom als Gerätewert genutzt werden.

Eine gleiche Gestaltung ergibt sich auch, wenn der Arbeitsvorgang, wie weiter möglich, aus einem Stanzen besteht.

Die Beendigung des bestimmten Arbeitsvorganges erfolgt bevorzugt bei allen beschriebenen Arbeitsvorgängen sogleich bei einer Erfassung der charakteristischen Änderung. Im Falle der beschriebenen Druckstufen kann bereits die erste erfasste Stufenhöhe, welche eine vorgegebene Stufenhöhe übersteigt, zur Beendigung des Arbeitsvorganges führen. Es kann aber auch eine Mitteilung über zwei oder mehrere, beispielsweise bis zu 5 oder 10 Druckstufen vorgenommen werden und das Überschreiten eines solchen Mittelwertes in Bezug auf einen vorgegebenen Mittelwert für eine solche Anzahl von Druckstufen dann zur Beendigung des Arbeitsvorganges herangezogen werden. Eine unnötige Belastung des Gerätes mit einer höheren Arbeitskraft als zur Vollendung des bestimmten Arbeitsvorganges erforderlich tritt also praktisch nicht ein bzw. kann äußerst gering gehalten werden. Gleiches gilt auch im Hinblick auf den Motorstrom, wenn dieser beispielsweise hinsichtlich der charakteristischen Änderung erfasst wird. Soweit es sich bei dem Motorstrom auch um einen Verlauf in Stufen handelt, wie angesprochen, kann praktisch eine gleiche Auswertung wie bei dem beschriebenen Druckanstieg im Hydraulikmittel erfolgen. Wenn der Motorstrom kontinuierlich ansteigt, kann über eine Kurvenerfassung und mathematische Ableitung die Steigung berechnet werden und sogleich bei Erreichen eines vorgegebenen Steigungsmaßes die Beendigung des bestimmten Arbeitsvorganges erfolgen. Der Motorstrom kann aber auch in Bezug auf zeitlich vorgegebene, bevorzugt sehr geringe Abstände auf den absoluten Anstieg überwacht werden und das - bevorzugt erste - Überschreiten eines bestimmten vorgegebenen Anstiegwertes die Beendigung des bestimmten Arbeitsvorganges auslösen.

Der Motorstrom kann eine andere Charakteristik aufweisen als ein Druckanstieg über die Zeit. Der Motorstrom kann insbesondere bei einer Kolbenpumpe sehr stark pulsieren, das heißt in Abhängigkeit der Bewegung eines Pumpkolbens der Kolbenpumpe sehr stark schwanken. Er kann ein Maximum bezüglich einer Pumpbewegung des Pumpkolbens beim Fördern, also beim Einschieben des Pumpkolbens in einen Pumpzylinder aufweisen und beim Zurückziehen des Pumpkolbens, was praktisch eine lastfreie Bewegung darstellt, sehr stark abfallen. Hier kann es sich empfehlen, einen geglätteten Stromverlauf zu ermitteln und beispielsweise dessen Steigung als Gerätewert heranzuziehen. Wenn die Steigung ein bestimmtes vorgegebenes Maß übersteigt, kann auch auf Basis eines solchen Motorstromes eine Beendigung des Arbeitsvorganges herbeigeführt werden. Bei der Ermittlung der Steigung einer solchen Kurve ist es prinzipiell erforderlich, auf einen Kraft-Weg-Zusammenhang (Kraft-Weg-Kurve) abzustellen und nicht auf einen Kraft-Zeit-Zusammenhang (Kraft-Zeit-Kurve). Es ist allerdings möglich, bei einer Kraft-Zeit-Kurve den Einfluss der variablen Motordrehzahl rechnerisch zu berücksichtigen und so eine Zeitachse in eine Wegachse zu überführen. Die Kraft muss nicht unmittelbar gemessen werden, sie kann auch aus einem Druck berechnet werden.

Im Hinblick auf eine Auswertung der Stufenhöhe eines gemessenen Druckes in einem Hydrauliksystem, wie nachstehend auch noch in weiterer Einzelheit erläutert, ergibt sich praktisch sogleich eine Kraft-Weg-Information, da insbesondere bei Verwendung einer Kolbenpumpe bei jedem Pumpenhub, hier also einem Kolbenhub der Kolbenpumpe, in erster Näherung eine immer gleiche Menge an Hydraulikmittel gefördert wird und damit der Hydraulikkolben in einen praktisch immer gleichen Weg je Hub der Kolbenpumpe zurücklegt. Die zugehörige Kraft für den Weg eines Hubes der Kolbenpumpe entspricht der Stufenhöhe. Damit ergibt sich das Maß der Stufenhöhe als unmittelbares Maß für eine mechanische (und auch hydraulische) Steifigkeit des Presskopfes und kann damit als Gerätewert herangezogen werden.

Da wie weiter angegeben die Erfassung der Gerätewerte in sehr kurzen Zeitabständen, und insofern kontinuierlich, erfolgt, kann also die Beendigung eines bestimmten Arbeitsvorganges zeitlich innerhalb von Bruchteilen einer Sekunde nach Erreichen der bestimmten Arbeitskraft erfolgen. Hiermit lässt sich nicht zuletzt auch eine zeitlich sehr effektive Ausnutzung des Arbeitsgerätes erreichen.
Es kann auch eine Erfassung mehrerer Gerätewerte gemeinsam zur Auswertung im Hinblick auf eine charakteristische Änderung herangezogen werden. Hierbei kann eine "und"- Verknüpfung, aber auch eine "oder"-Verknüpfung zugrunde gelegt werden. Im Falle einer "oder"-Verknüpfung erfolgt die Beendigung des Arbeitsvorganges, wenn einer der herangezogenen Gerätewerte die charakteristische Änderung aufweist. Bei einer "und"-Verknüpfung erfolgt entsprechend eine Beendigung des Arbeitsvorganges erst dann, wenn alle herangezogenen Gerätewerte die charakteristische Änderung aufweisen.

### Kurze Beschreibung der Zeichnungen

Nachstehend ist die Erfindung des Weiteren anhand der beigefügten Zeichnung, auf welcher jedoch nur ein Ausführungsbeispiel wiedergegeben ist, erläutert. Hierbei zeigt:
- Fig. 1: ein hydraulisches Hand-Pressgerät, teilweise geschnitten;
- Fig. 2: das Pressgerät gemäß Fig. 1 nach Erreichen der bestimmten Arbeitskraft;
- Fig. 3: ein hydraulisch betätigtes Schneidgerät vor Beginn eines Arbeitsvorganges;
- Fig. 4: einen Teilbereich des Arbeitsgerätes gemäß Fig. 3, nach Erreichen der bestimmten Arbeitskraft;
- Fig. 5: eine elektromotorisch betätigtes Presswerkzeug vor Durchführung eines bestimmten Arbeitsvorganges;
- Fig. 6: das Presswerkezeug gemäß Fig. 5 nach Erreichen der bestimmten Arbeitskraft;
- Fig. 7: ein elektromotorisch betätigtes Schneidgerät vor Beginn eines Arbeitsvorganges;
- Fig. 8: das Arbeitsgerät gemäß Fig. 7 nach Erreichen der bestimmten Arbeitskraft;
- Fig. 9: eine Darstellung des Druckanstiegs in einem Hydraulikmittel bei Durchführung eines Arbeitsvorganges;
- Fig. 9a: eine Darstellung der bei Druckstufen in Abhängigkeit der Zeit etwa bei einer Verpressung gemäß Fig. 9, absolut erreichten Druckwerte;
- Fig. 10: eine Darstellung des Motorstromes, aufgetragen über die Zeit, einer Kolbenpumpe eines elektrohydraulischen Hand-Presswerkzeuges;
- Fig. 10a: eine Herausvergrößerung des Bereiches Xa aus Fig. 10;
- Fig. 11: einen Schnitt durch ein hydraulisch betriebenes HandPresswerkzeug mit bestimmter Ausgestaltung hinsichtlich des Rücklaufventils;
- Fig. 12: die Herausvergrößerung des Bereichs XII - XII in Fig. 11;
- Fig. 13: eine der Fig. 11 entsprechende Darstellung, bei Bewegung eines Bewegungsteils des Hand-Presswerkzeuges in eine Arbeitsstellung;
- Fig. 14: eine Fig. 13 entsprechende Darstellung, bei geöffnetem Rücklaufventil und betätigtem Druckerhöhungskolben und
- Fig. 15: die Herausvergrößerung des Bereiches XV in Fig. 14.

### Beschreibung der Ausführungsformen

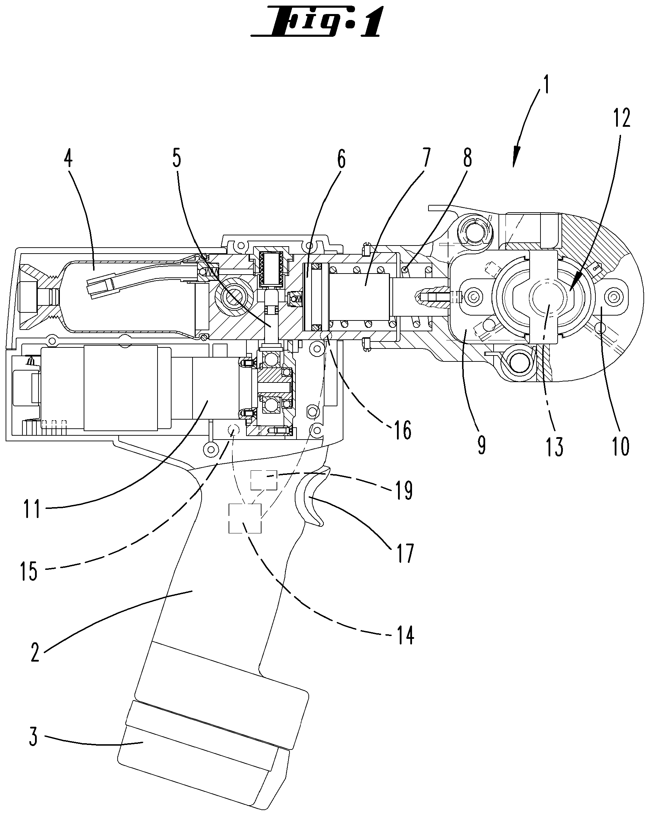

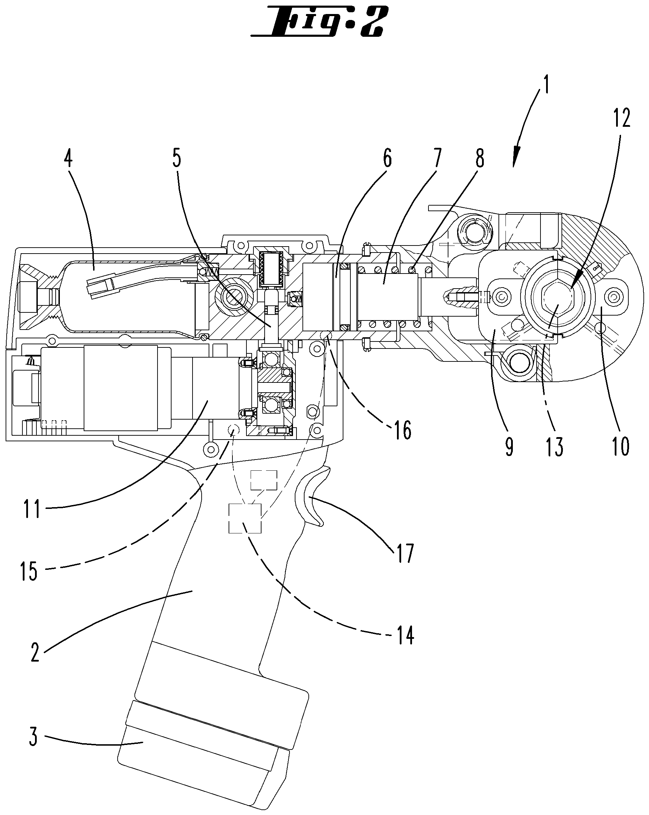

Mit Bezug zu den Figuren 1 und 2 ist zunächst ein hydraulisch betriebenes Hand-Presswerkzeug 1 dargestellt. Das hydraulisch betriebene Hand-Presswerkzeug 1 kann einen Griff 2 aufweisen. Weiter einen Akkumulator 3, wenn es kabellos betrieben werden soll. Es ist aber auch ein Anschluss mittels eines Elektrokabels an eine Versorgung über ein elektrisches Netz möglich.

Das hydraulische Hand-Presswerkzeug 1 kann weiter einen Hydrauliktank 4 aufweisen. Mittels einer Pumpe 5, beispielsweise einer Kolbenpumpe, kann Hydraulikmittel aus dem Hydrauliktank 4 in einen Hydraulikzylinder 6 gepumpt werden. Mit Einpumpen des Hydraulikmittels in den Hydraulikzylinder 6 kann ein Hydraulikkolben 7 in dem Hydraulikzylinder 6 zwischen einer Anfangsstellung und einer Endstellung bewegt werden. Der Hydraulikkolben 7 kann unter der Wirkung einer Rückstellfeder 8 stehen.

Durch die Bewegung des Hydraulikkolbens 7 kann eine bewegliche Arbeitsbacke 9 beim Ausführungsbeispiel gegen eine feststehende Arbeitsbacke 10 verschoben werden. In einem Pressraum 12 kann ein Pressling 13 aufgenommen sein. Der Pressling 13 kann beispielsweise aus einer Hülse und einem Rohr, die miteinander zu verpressen sind, bestehen.

Bei anderen hydraulischen Hand-Pressgeräten können auch zwei bewegliche Arbeitsbacken durch beispielsweise den Hydraulikkolben 7 gegeneinander zur Verpressung verschwenkt werden.

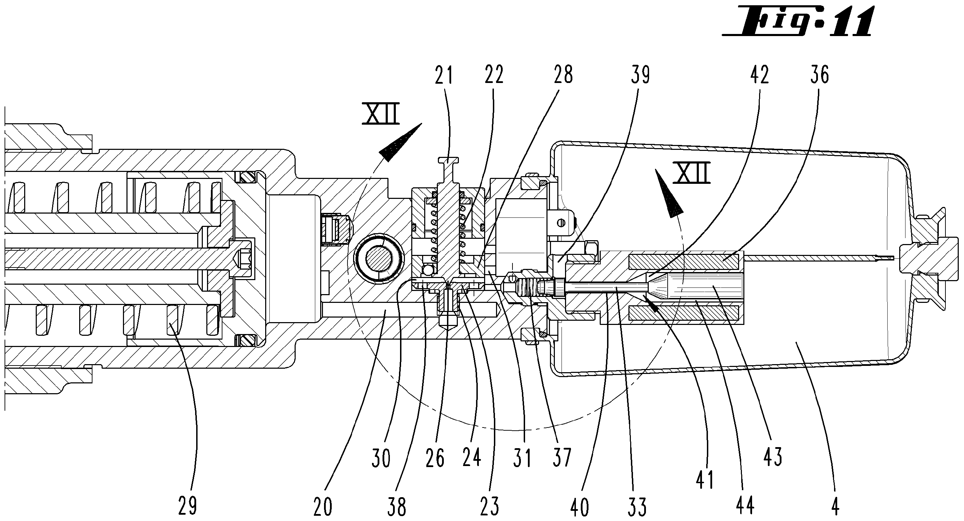

Die Pumpe 5 kann mittels eines Elektromotors 11 angetrieben sein, der seine Energieversorgung über den schon erwähnten Akkumulator 3 erhalten kann oder beispielsweise über das auch erwähnte Netzkabel. Weiter weist ein hydraulisches Handpressgerät gemäß Figur 1, wie aber im Weiteren auch die weiteren dargestellten Geräte, eine zur Auswertung von übermittelten Messwerten geeignete Datenverarbeitungseinrichtung auf, die hier mit 14 schematisch wiedergegeben ist. Weiter verfügt ein derartiges Gerät über eine Steuereinrichtung, die hier schematisch mit 19 angegeben ist und in Leitungsverbindung zu der Datenverarbeitungseinrichtung 14 steht. Die Funktionen der Datenverarbeitungseinrichtung 14 und der Steuereinrichtung 19 können auch durch ein einheitliches elektronisches Bauteil erbracht werden. Über die Steuereinrichtung kann unmittelbar und geräte-autonom eine Beendigung eines Arbeitsvorganges durchgeführt werden. Beispielsweise in einer Ausgestaltung wie sie mit Bezug zu den Figuren 11 bis 15 weiter unten beschrieben ist.

Desgleichen kann das hydraulische Handpressgerät 1 einen Sensor 15 zur Erfassung des Motorstroms des Elektromotors 11 aufweisen und/oder einen Sensor 16 zur Erfassung eines Druckes in dem Hydraulikmittel. Bevorzugt wird der Druck des Hydraulikmittels durch den Sensor 16 in dem Hydraulikzylinder 6 gemessen.

Der Sensor 15 für den Motorstrom und/oder der Sensor 16 für den hydraulischen Druck liefert jeweils Messwerte in sehr kurzen Zeitabständen. Die Zeitabstände sind insbesondere unterhalb von einer Sekunde, weiter bevorzugt unterhalb von einer Zehntelsekunde gegeben. Ein solcher Zeitabstand kann auch nur eine oder mehrere Millisekunden betragen.

Insbesondere handelt es sich um elektronische Sensoren, die ihrerseits beispielsweise über den Akkumulator 3 mit elektrischer Energie versorgt sind.

Eine Beendigung eines Arbeitsvorganges kann darin bestehen, dass Arbeitsteile wie eine Backe bei einem Verpresswerkzeug oder eine Schneide bei einem Schneidwerkzeug oder eine Stanzbacke bei einem Stanzwerkzeug in eine Anfangsstellung zurückbewegt werden oder eine solche Zurückbewegung eingeleitet wird. Bei einem hydraulischen Presswerkzeug kann die Einleitung insbesondere darin bestehen, dass ein Hydraulikkolben unter Zurückleitung von Hydraulikmittel aus einem Hydraulikzylinder in den Vorratstank zurückgefahren wird. Hierzu ist in der Regel insbesondere die Öffnung eines Rücklaufventils erforderlich. Hinsichtlich einer speziellen Ausführungsform eines solchen hydraulischen Pressgerätes ist dies weiter unten mit Bezug zu den Figuren 11 bis 15 anhand eines möglichen Ausführungsbeispiels im Einzelnen beschrieben.

Bei Durchführung eines Verpressvorganges allgemein mit dem hydraulischen Handpressgerät 1 wird beispielsweise über einen von Hand zu betätigenden Schalter 17 nach Einlegung eines Presslings 13 in den Pressraum 12 eine Verpressung ausgelöst. Die Pumpe 5, die beim Ausführungsbeispiel eine Kolbenpumpe ist, beginnt sodann unter Durchführung einer Vielzahl von Kolbenhüben Hydraulikmittel aus dem Hydrauliktank 4 in den Hydraulikzylinder 6 zu pumpen.

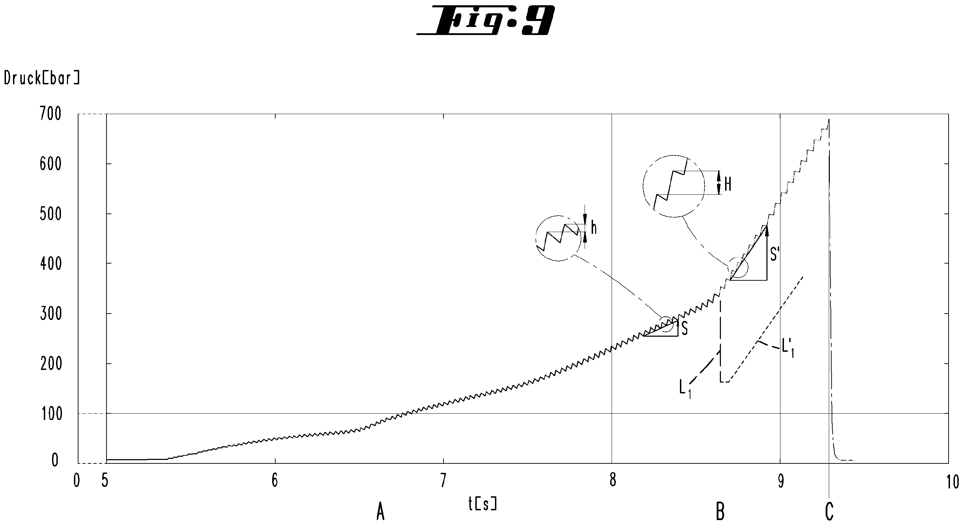

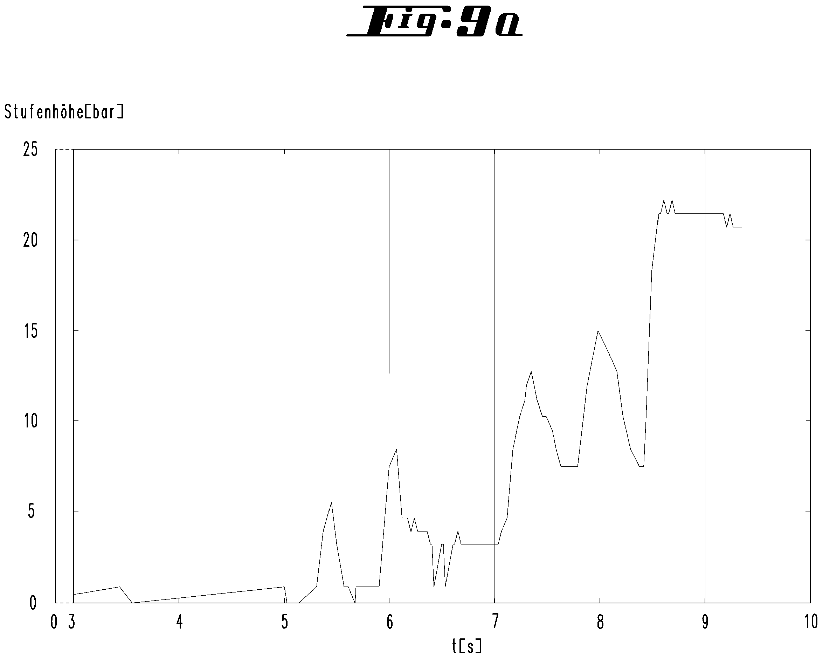

Wie sich aus Figur 9 ergibt, bei welcher auf der Ordinate der Druck und auf der Abszisse die Zeit aufgetragen ist, ergibt sich ein gewisser Anstieg des Druckes, aus welchem sich auch - was aber vorliegend nicht weiter von Interesse ist - an dem Punkt A die Werkstückberührung durch die Pressbacken erkennen lässt. Der Druck steigt weiter an, und zwar in der Regel stärker als vor der Werkstückberührung, bis zu einem Punkt B. Bei diesem Punkt B ist die bestimmte Arbeitskraft erreicht und eigentlich keine höhere Arbeitskraft mehr erforderlich.

Es ergibt sich nach dem Punkt B eine charakteristische Änderung in der Steigung S bzw. S' der Druckkurve und zudem noch hinsichtlich einer einzelnen sich darstellenden Stufe des Druckwertes, siehe Lupendarstellung in Figur 9, eine charakteristische Erhöhung hinsichtlich der Stufenhöhe H gegenüber einer Stufenhöhe h vor Erreichen des Punktes B.

Dieser charakteristische Wert der Stufenhöhe H wird beim Ausführungsbeispiel dazu genutzt, das Erreichen der bestimmten Arbeitskraft festzustellen und ein Erreichen der Stufenhöhe H als Signal zur Beendigung des bestimmten Arbeitsvorganges zu nutzen.

In einem Speicher der Datenverarbeitungseinrichtung und/oder der Steuerungseinrichtung kann ein bestimmter Gerätewert gespeichert sein, der im Hinblick auf einen tatsächlich erfassten Gerätewert zum Vergleich herangezogen wird und dessen Überschreiten (oder gegebenenfalls auch Unterschreiten) als Signal zur Beendigung des bestimmten Arbeitsvorganges genutzt wird. Der gespeicherte Gerätewert kann ein Absolutwert sein wie bspw. die beschriebene Stufenhöhe oder auch ein Relativwert, der bspw. hinsichtlich eines Überschreitens einer vorherigen Stufenhöhe (oder mehrerer gemittelter Stufenhöhen) eine prozentuale Grenze wie bspw. 10% oder 20% vorgibt.

Der gespeicherte Grenzwert kann auch ein Wert für die genannte Steigung sein, so dass die jeweils berechnete Steigung hiermit verglichen werden kann.

Lediglich zur Verdeutlichung ist in Figur 9 in gestrichelter Darstellung der Arbeitsvorgang noch weitergeführt worden, hier bis zu einem Punkt C, der ein Erreichen der allgemeinen Arbeitskraft dargestellt.

Der stufenartige Verlauf der Druckkurve ist beim Ausführungsbeispiel durch die verwendete Kolbenpumpe verursacht. Beim Hochfahren des Kolbens wird eine höhere Druckstufe erreicht, wobei beim Zurücklaufen des Kolbens dieser Druck gehalten wird oder leicht abfällt, bis bei einem nächsten Hochlaufen des Kolbens der Druck wieder erhöht wird. Eine solche Kolbenpumpe arbeitet üblicherweise mit einer Frequenz > als 1 pro Sekunde. Durch die mindestens der Frequenz der Kolbenpumpe in diesem Ausführungsbeispiel entsprechende Frequenz in der Erfassung eines Gerätewertes, also beispielsweise eines hydraulischen Druckwertes oder eines Wertes bezüglich der Höhe des Motorstromes, kann das Arbeiten der Pumpe in sehr großer Auflösung, hier also in einer Auflösung, welche eine einzelne Druckstufe, die durch eine Kolbenbewegung der Kolbenpumpe erzeugt ist, erfasst werden. Die Messung hinsichtlich des Absolutwertes einer Druckstufe bzw. der Höhe einer Druckstufe wird derart vorgenommen, dass die Werte zu einem vergleichbaren Zeitpunkt verglichen werden. Entweder beispielsweise zu Beginn eines Kolbenhubes oder am Ende eines (Vorwärts-)Kolbenhubes der Kolbenpumpe (wenn eine solche verwendet wird).

In Figur 9a ist eine bei einem beispielhaften Hand-Pressgerät gemessene Höhe der Druckstufen über die Zeit aufgetragen. Ersichtlich ist am Schluss (im Bereich von 9 Sekunden) eine absolute Höhe von ca. 22 bar bei einer Druckstufe erreicht. Das Erreichen dieses vorgegebenen Absolutwertes (der wie nachstehend noch weiter erläutert charakteristisch für ein bestimmtes Hand-Pressgerät sein kann) kann dann zur Beendigung des Arbeitsvorganges herangezogen werden.

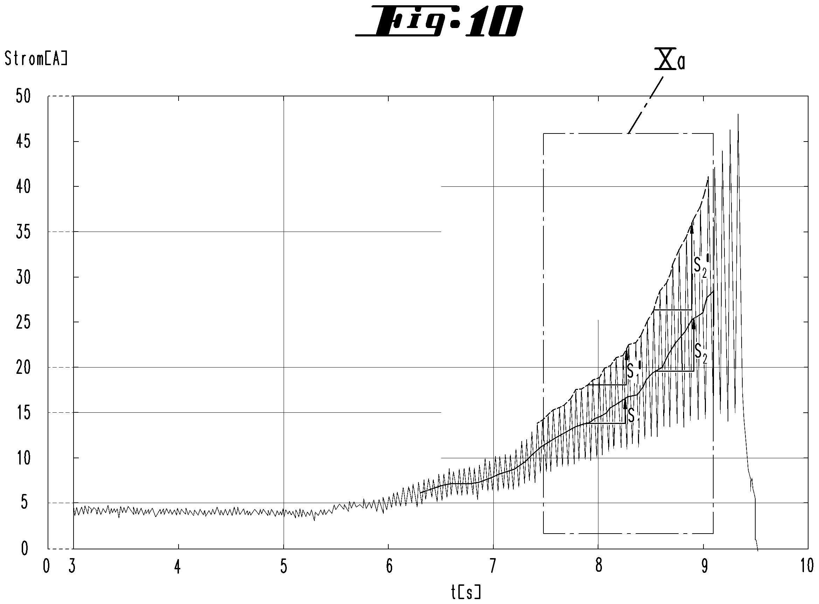

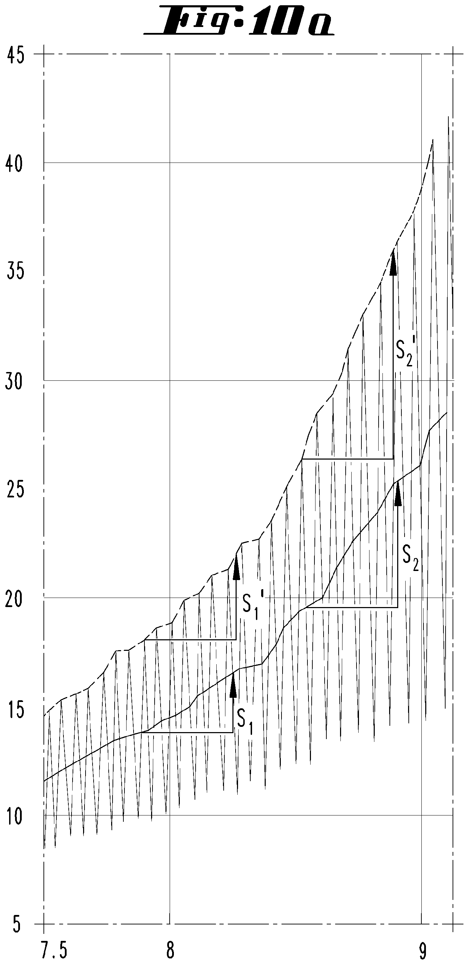

In Figur 10 ist eine Charakteristik eines Motorstromes einer Kolbenpumpe eines elektrohydraulisch betriebenen Hand-Pressgerätes wiedergegeben. Im Weiteren ist eine gemittelte Stromkurve eingezeichnet, anhand welcher der Übergang von einer (vorangehenden) Steigung S₁ zu einer zur Beendigung des Arbeitsvorganges herangezogenen Steigung S₂ als entsprechender Gerätewert zur Beendigung des Arbeitsvorganges genutzt werden kann. Entsprechend ist der Punkt B am Übergang zwischen den charakteristischen Steigungen gegeben bzw. am Übergang zu einer charakteristisch hohen Steigung.

Diese Steigung kann auch anhand beispielsweise der Maximalwerte der Stromkurve, siehe gestrichelte Linien und Steigungen S₁' und S₂', beispielsweise festgemacht werden.

In Fig. 10a ist der Bereich Xa aus Fig. 10 vergrößert wiedergegeben. Ersichtlich kann über die Stromspitzen eine berechnete Linie gelegt werden und hierzu Steigungen S₁' und S₂' berechnet werden. Es kann auch über den Stromverlauf insgesamt eine Mittelung vorgenommen werden, siehe durchgezogene Linie und hieran die Steigungen S₁ oder S₂ erfasst bzw. berechnet werden.

Hinsichtlich der Druckstufen gemäß Figuren 9, 9a hat sich auch gezeigt, dass eine zur Abschaltung führende hohe Druckstufe einen bestimmten Absolutwert aufweist, der praktisch unabhängig ist von den zu verpressenden Gegenständen, sondern als Konstante eines bestimmten Gerätes anzusehen ist. Bei einem konkreten hydraulisch betriebenen Pressgerät kann diese Konstante beispielsweise zwischen 15 und 25 bar, konkreter bei 20 bis 22 bar, liegen.

Es hat sich auch herausgestellt, dass dieser oder ein sonstiger, einem Gerät in diesem Sinne entsprechender Absolutwert auch nur dann erreicht wird, wenn alle hierfür erforderlichen Komponenten des Gerätes wie beispielsweise Rückschlagventile, elektrischer Antrieb usw. in einem ordnungsgemäßen Zustand sind. Wenn sich ein Verschleiß einstellt, wird die genannte Höhe nicht mehr erreicht, gleichwohl kann aber eine zuverlässige Verpressung noch erreicht werden, da in diesem Fall der übliche Anstieg auf den zugelassenen Maximalwert des Druckes (auf die allgemeine Arbeitskraft) erfolgt und eine Beendigung des Arbeitsvorganges anhand eines Erreichens der allgemeinen Arbeitskraft erfolgen kann.

Im Weiteren kann dieser Zusammenhang auch dazu benutzt werden, dass ein ein- oder mehrmaliges Erreichen der allgemeinen Arbeitskraft zu einer Meldung an den Nutzer herangezogen wird, eine Überprüfung des Gerätes vorzunehmen. Darüber hinaus kann eine solche ein- oder mehrfache Erreichung der allgemeinen Arbeitskraft, wobei eine gewisse Anzahl vorgegeben werden kann, beispielsweise zwischen drei und zehn Fällen, insbesondere dann, wenn, was weiter vorgegeben werden kann, diese Anzahl von Fällen unmittelbar hintereinander auftritt, ein Außer-Betrieb-Setzen des Gerätes sich auslösen, was also den Benutzer zwingt, eine Überprüfung, gegebenenfalls eine werkseitige Überprüfung, vorzunehmen oder vornehmen zu lassen.

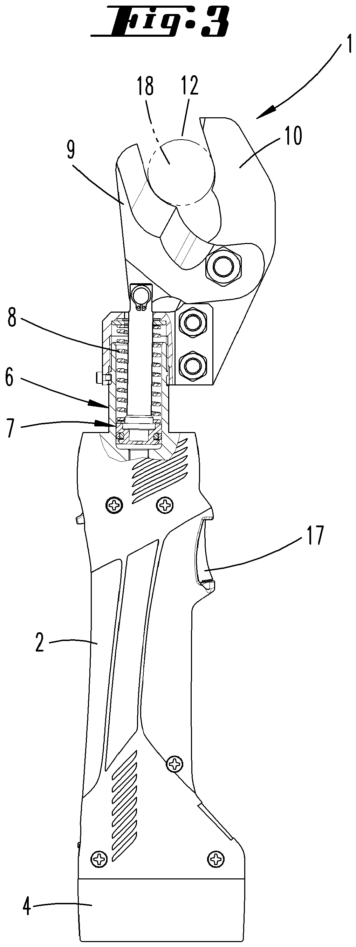

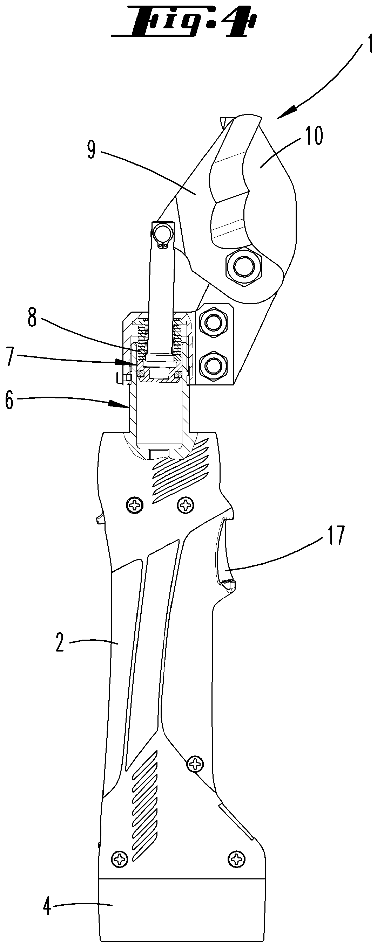

Das Ausführungsbeispiel der Figuren 3 und 4 zeigt in gleicher Weise die Vorgänge bei einem Schneidgerät. Hier ist ein Schneidling 18, der durchzuschneiden ist, in Figur 3 dargestellt. In Figur 4 ist der Schneidvorgang beendet.

Da nach dem Schneiden aber zunächst ein schlagartiger Abfall in der Arbeitskraft eintritt, ist dieser Vorgang in Figur 9 durch die gestrichelte Linie L₁ wiedergegeben. Hierbei ergibt sich nach dem Abfall der Anstieg im Bereich L₁' dadurch, dass beim Ausführungsbeispiel der Hydraulikkolben 7 sich aufgrund der Knöcherung der Rückstellfeder 8 nicht weiter bewegen kann und somit es zu dem Druckanstieg durch "auf Block fahren" zwischen dem Hydraulikkolben und dem Hydraulikzylinder kommt. Auch hier kann der charakteristische Anstieg in der Stufenhöhe, wenn eine Kolbenpumpe verwendet wird, oder auch die charakteristische Änderung, nämlich im Hinblick auf eine größere Steigung einer Druckanstiegskurve als solcher, als Signal genommen werden, den bestimmten Arbeitsvorgang zu beenden.

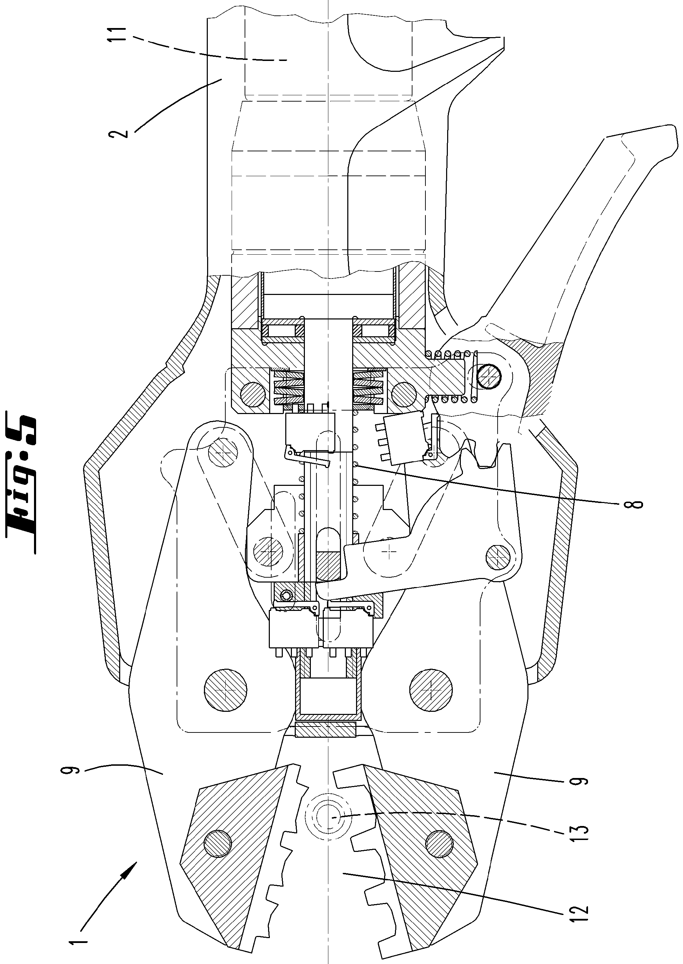

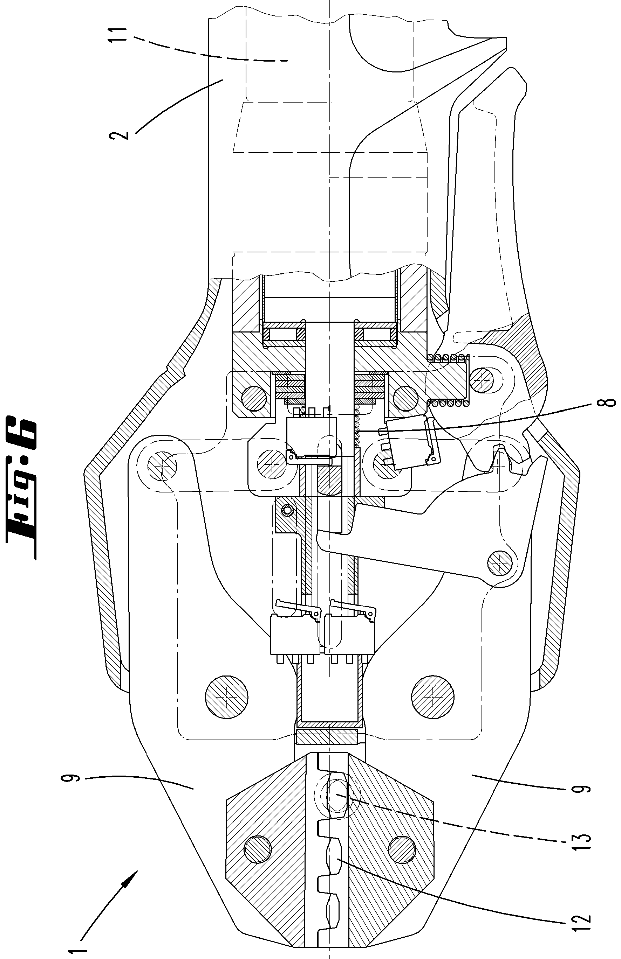

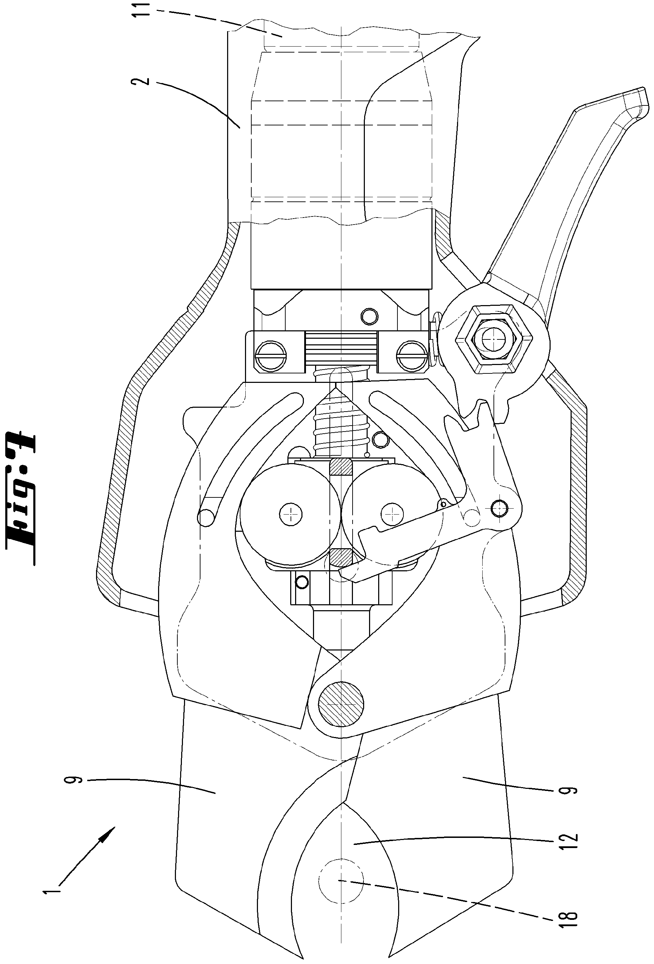

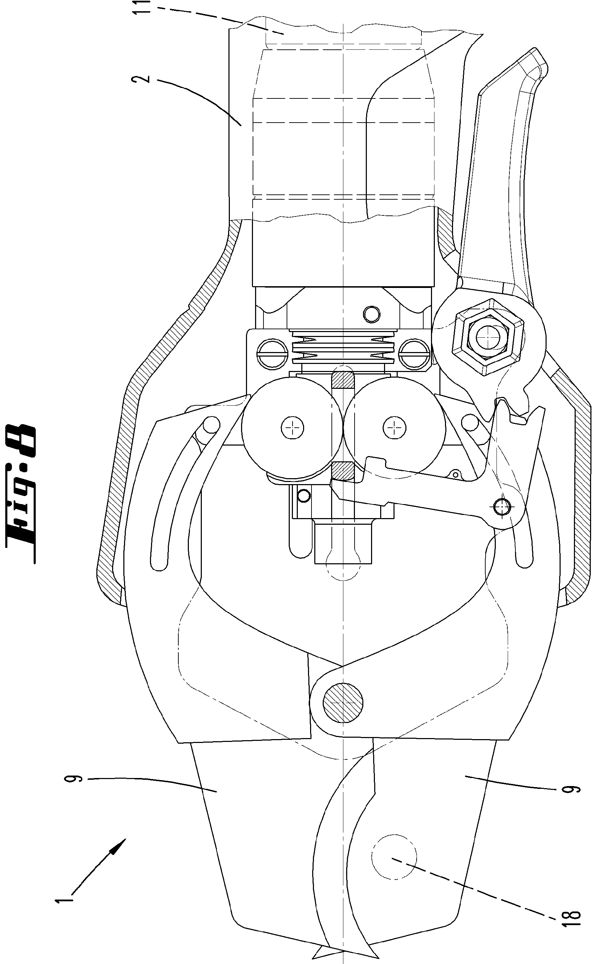

Bei den Ausführungsbeispielen der Figuren 5 und 6 sowie 7 und 8 ist nur ein Elektromotor 11 vorgesehen, der unmittelbar auf eine Spindel einwirkt und so ein Verfahren der Pressbacken oder Schneidbacken bewirkt. In diesem Fall bietet sich zur Erfassung einer charakteristischen Änderung eines Gerätewertes die Auswertung des Motorstroms des Elektromotors 11 an. Alternativ oder ergänzend kann als Gerätewert, dessen charakteristische Änderung zur Auswertung herangezogen wird, auch eine beispielsweise über einen Dehnungsmessstreifen in einem im Zuge eines Arbeitsvorganges kraftbeaufschlagten Geräteteil gemessene Kraft, Dehnung oder Spannung genutzt werden.

Die Beendigung des bestimmten Arbeitsvorganges wird im Falle einer hydraulischen Erzeugung der Arbeitskraft bevorzugt durch die Öffnung eines Rücklaufventils eingeleitet. Zugleich wird bevorzugt die Hydraulikpumpe angeschaltet. Als Rücklaufventil kann beispielsweise ein magnetbetätigtes Rücklaufventil zum Einsatz kommen, wie es in der DE 102015102806 beschrieben ist. Der Inhalt dieser Anmeldung wird hiermit vollinhaltlich, auch zum Zwecke, Merkmale der genannten älteren Anmeldung in Ansprüche vorliegender Anmeldung aufzunehmen, in die Offenbarung vorliegender Anmeldung mit einbezogen.

Im Falle eines nur elektromotorisch betätigten Arbeitsgerätes kann die Beendigung des bestimmten Arbeitsvorganges durch Anhalten und bevorzugt sogleich auch eingeleitetes Rückdrehen des Elektromotors 11 vorgenommen werden. Durch das Rückdrehen können Arbeitsmittel wie die genannten Arbeitsbacken oder Schneidbacken wieder geöffnet werden.

Mit Bezug zu den Figuren 11 bis 15 ist nun die Betätigung eines Rücklaufventils zur Beendigung eines Arbeitsvorganges bzw. jedenfalls zur Einleitung der Beendigung bei einem hydraulischen Pressgerät in weiterer Einzelheit beschrieben.

Das in den Figuren 11 bis 15 dargestellte hydraulische Pressgerät weist entsprechend dem in Figur 1 dargestellten hydraulischen Pressgerät einen hier im Einzelnen nicht wiedergegebenen Elektromotor 11, einen Hydraulikmittel-Vorratsraum 4 und eine Pumpe 5 auf.

Weiter besitzt das hydraulische Pressgerät der Figuren 11 bis 15 einen Hydraulikkolben 7, der durch hydraulische Beaufschlagung relativ zu dem Hydraulikzylinder 6 bewegbar ist.

In den Hydraulikzylinder 6 wird zur Durchführung eines Arbeitsvorganges mit der Pumpe 5 Hydraulikmittel gepumpt. Der Hydraulikzylinder 6 weist weiter eine Rücklaufleitung 20 auf, über welche das Hydraulikmittel über das Rücklaufventil 21 in den Hydrauliktank 4 zurückfließen kann.

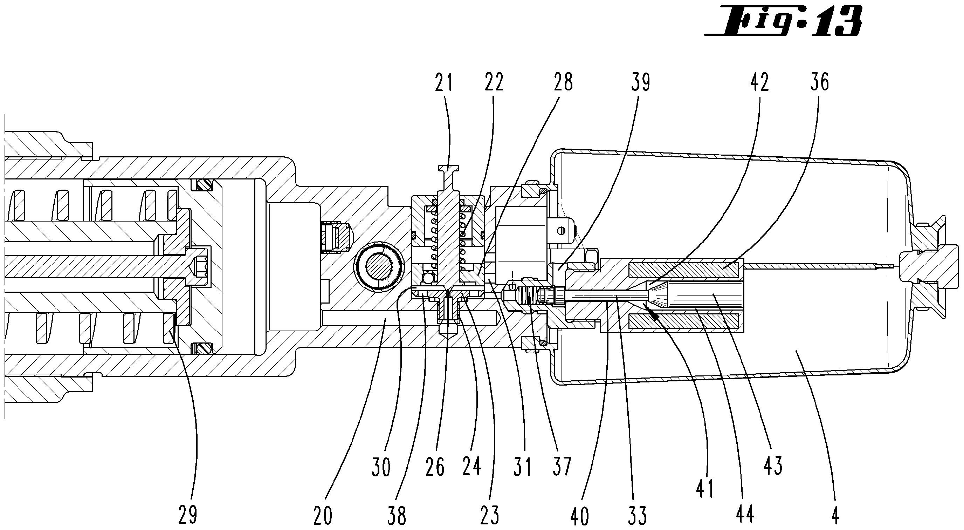

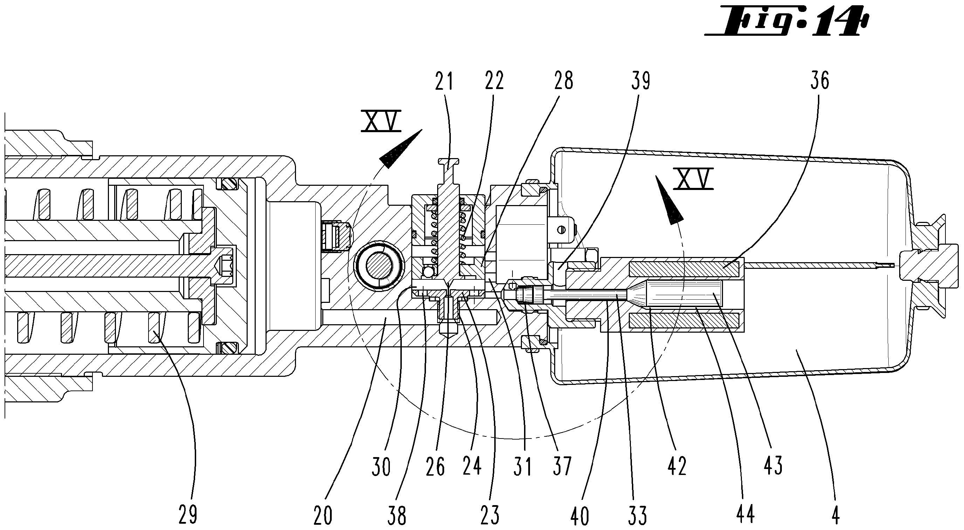

Wie sich insbesondere aus den Figuren 13 und 14 ergibt, ändert sich das Volumen in dem Hydraulikzylinder 6 mit dem Arbeitszustand des hydraulischen Hand-Pressgerätes 1. Bei der Darstellung gemäß Figur 13 ist der Hydraulikkolben 7 in einer gegenüber Figur 11 geänderten Position. Nach einem Öffnen des Rücklaufventils 21 (Figur 14), was einer Beendigung des bestimmten Arbeitsvorganges bzw. dessen Einleitung entspricht, bewegt sich der Hydraulikkolben 7 zurück in Richtung seiner Ausgangsstellung gemäß Figur 11.

Der Elektromotor 11 zum Betreiben der Pumpe 5 und somit zum Verfahren des Hydraulikkolbens 7 in Richtung auf eine Arbeitsstellung wird über einen bevorzugt als handbetätigbarer Taster ausgebildeten Schalter 17 aktiviert. Die Elektroversorgung des Elektromotors 11, wie darüber hinaus bevorzugt auch der schon angesprochenen Schalt-/Steuerungselektronik und ggf. weiterer elektrischer oder elektronischer Bauteile des Gerätes, erfolgt über einen in den Figuren 11 bis 15 nicht dargestellten, geräteseitigen Akkumulator oder über eine elektrische Leitung für eine Netzverbindung.

Das Rücklaufventil 21 ist in der Ventilverschlussstellung mittels einer Andruckfeder 22 in den Ventilsitz gedrückt. Der Ventilsitz besteht im Einzelnen bevorzugt aus einem Einschraubteil 23, das über ein Gewinde 24 in das Gehäuse des hydraulischen Hand-Pressgerätes 1 eingeschraubt ist.

In dem Ventilsitz, gegebenenfalls in dem Einschraubteil 23, ist eine Durchflussbohrung 25 vorgesehen. Diese steht strömungsmäßig in Verbindung mit der Rücklaufleitung 20.

Aufgrund des engen Querschnittes der Durchflussbohrung 25 in dem Ventilsitz in Zusammenwirkung mit der durch die Andruckfeder 22 aufgebrachten Vorspannung öffnet das Rücklaufventil 21 grundsätzlich nur bei Überschreiten eines bestimmten Auslösedrucks. Es handelt sich um beispielsweise einen Druck von 600 oder 700 bar. Dieser Auslösedruck entspricht dem Erreichen der allgemeinen Arbeitskraft.

Nachdem das Rücklaufventil 21 geöffnet hat, steht der Druck des Hydraulikmittels nicht mehr nur an der der Querschnittsfläche der Durchflussbohrung 25 entsprechenden Fläche, einer Teilkolbenfläche, beispielsweise gegeben durch eine Ventilnadel 26, an, sondern an der gesamten, dem Hydraulikraum (insbesondere Hydraulikzylinder 6) zugewandten Fläche, der Unterfläche 27 des die Ventilnadel 26 aufweisenden Rücklaufventil-Kolben 28 des Rücklaufventils 21. Daher wird das geöffnete Rücklaufventil 21 durch einen sehr geringen Druck in der Rücklaufleitung 20, beispielsweise einem Druck von 2 bis 5 bar, bereits in der Offenstellung gehalten. Die Ventilnadel 26 muss nicht ideal spitz zulaufend gebildet sein. Vorzugsweise ist sie jedenfalls konusförmig gebildet.

Dieser geringe Druck wird beim Rücklauf des Hydraulikkolbens 7 bevorzugt durch eine auf den Hydraulikkolben 7 wirkende und den Hydraulikkolben 7 in die Endstellung belastende Feder 29 erzeugt.

In einer Ablauf-Strömungsrichtung nach der Durchflussbohrung 25 ist der Druck nochmals deutlich geringer. Beispielsweise beträgt der Druck insbesondere zu Beginn des Rücklaufes des Hydraulikkolbens nur ¾ oder weniger des Druckes vor der Durchflussbohrung 25 bzw. dem Ventilsitz, in der Praxis beispielsweise etwa der Hälfte. Dieser Druckunterschied gleicht sich danach aber im Wesentlichen aus und ist bald nach Beginn des Rücklaufs des Hydraulik-Kolbens 7 in der Regel nur noch vergleichsweise gering.

Nach Öffnen des Rücklaufventils 21 ist der sich an der Durchflussbohrung 25 anschließende Raum 30 bis zu der Unterfläche 27 des Rücklaufventil-Kolbens 28 in den Hydraulikraum einbezogen. Das Hydraulikmittel strömt dann über eine Ablauföffnung 31 in den Hydrauliktank 4. Der Raum 30 ist vor- und nachstehend auch als Ventilraum bezeichnet.

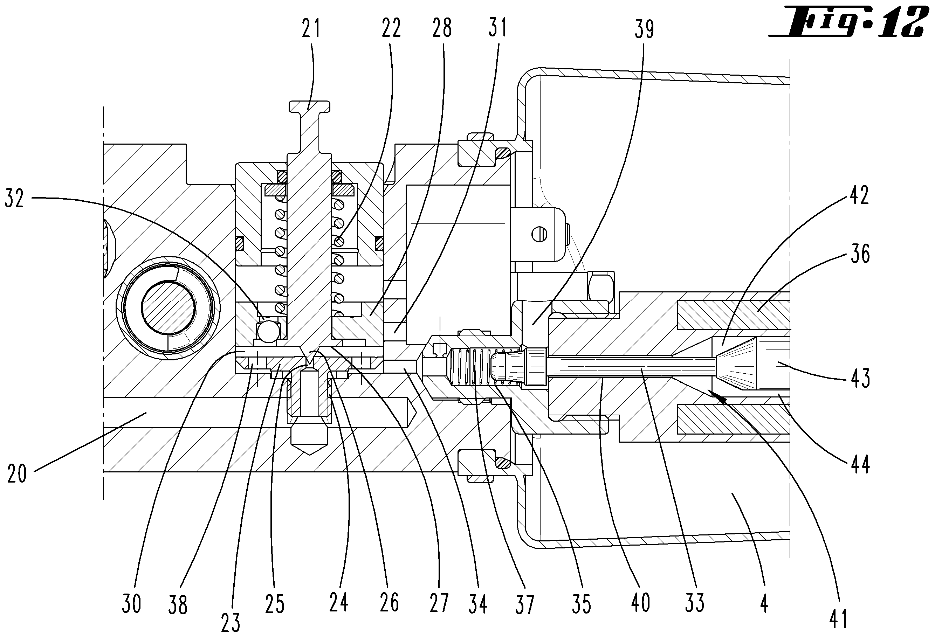

Eine die Unterfläche 27 durchsetzende und bevorzugt rückschlaggesicherte Axialbohrung 32 ermöglicht im Verschlusszustand des Rücklaufventils 21 gemäß den Figuren 11 und 12 ein Nachströmen von Hydraulikmittel aus dem Hydrauliktank 4 insbesondere zur Erleichterung eines Rücklaufs eines Druckerhöhungskolbens 33.

Ohne eine weitere Maßnahme entspricht also der die Ventilnadel 26 aus dem Ventilsitz abhebende Hydraulik- bzw. Auslösedruck einem Erreichen der allgemeinen Arbeitskraft.

Durch die hier beschriebene Beendigung des bestimmten Arbeitsvorganges bei Erreichen der charakteristischen Änderung des Gerätewertes wird jedoch das Rücklaufventil 21 in seine Öffnungsstellung verlagert, ohne dass am Hydraulikkolben 4 der zum Anheben des Rücklaufventils 21 nötige Hydraulikdruck notwendig anliegt.

Hierzu ist mit Bezug zu dem in den Figuren 11 bis 15 beschriebenen Ausführungsbeispiel bevorzugt zugeordnet zu dem sich in Abströmrichtung an die Durchflussbohrung 25 anschließenden Hydraulikraum eine weitere im Betriebszustand mit Hydraulikflüssigkeit gefüllte Leitung 34 vorgesehen. Diese Leitung 34 setzt sich in einem Hydraulikmittel-Zylinder 35 fort, in welchem der schon genannte Druckerhöhungskolben 33 bevorzugt linear verschiebbar ist. Die Leitung 34 könnte auch kürzer ausgebildet sein als dargestellt oder auch wegfallen.

Mittels eines elektrisch ansteuerbaren Stellmagneten 36 ist eine Linearbewegung des Druckerhöhungskolbens 33 in dem Hydraulikmittel-Zylinder 35 bzw. in der Leitung 34 erreichbar. Die bei Aktivierung des Stellmagneten 36 herbeigeführte Bewegung des Druckerhöhungskolbens 33 erfolgt bevorzugt entgegen der Kraft einer auf den Druckerhöhungskolben 33 wirkenden Rückstellfeder 37.

Über in dem beispielsweise Einschraubteil 23 vorgesehene, bevorzugt in Verlagerungsrichtung des Rücklaufventils 21 ausgerichtete Bohrungen 38 bildet die Leitung 34 hydraulisch einen Teil des Raumes 30.

Das Einschraubteil 23 liegt im Einbauzustand nicht unmittelbar an der zugewandten Gehäusewandung an, so dass von dem Druckerhöhungskolben 33 bewegtes Hydraulikmittel ohne weiteres aus der Leitung 34 über die Bohrung 38 in den sich in Abfließrichtung des Hydraulikmittels nach dem Ventilsitz gegebenen Teil des Raumes 30 strömen kann.

Im Zuge der Durchführung eines Arbeitsvorganges werden nun ein oder mehrere Gerätewerte, wie etwa der Druck im Hydraulikmittel oder die Höhe des Motorstroms des Elektromotors erfasst und im Hinblick auf die genannte charakteristische Änderung ausgewertet.

Mit Erreichen der durch einen Vergleichswert vorgegebenen charakteristischen Änderung wird ein entsprechendes Signal in der Steuerung generiert, das zu einer Aktivierung des Stellmagneten 36 führt.

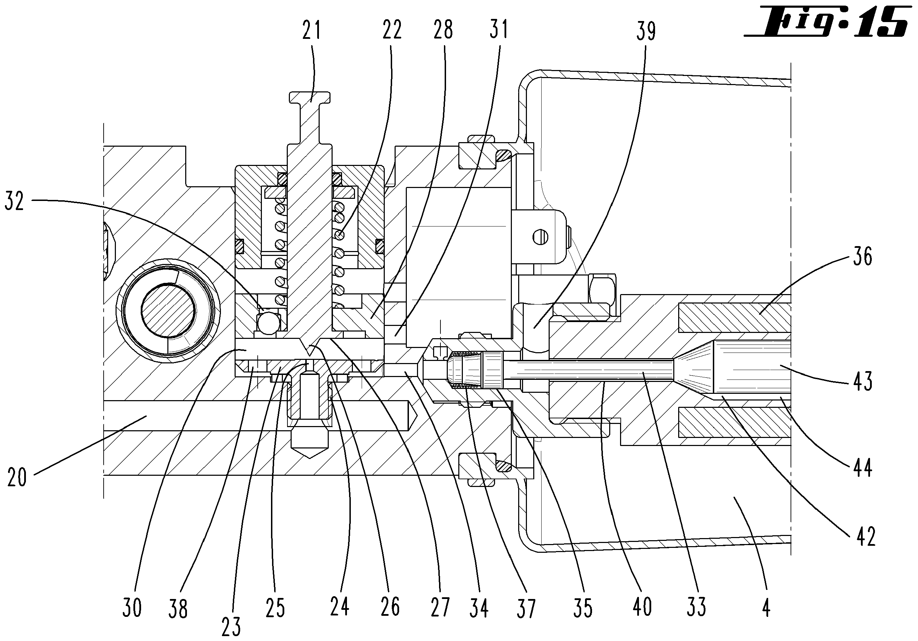

Der Druckerhöhungskolben 33 verfährt zufolge der Aktivierung des Stellmagneten 36 entgegen auch der Kraft der vorzugsweise vorgesehenen Rückstellfeder 37 schlagartig in die Vorschubstellung gemäß den Darstellungen in den Figuren 14 und 15. Hierdurch verfährt der Druckerhöhungskolben 33 in einer sehr engen, praktisch umfangsmäßig abgedichteten Zusammenwirkung mit dem Hydraulikmittel-Zylinder 35 der Leitung 34. Vor dem Druckerhöhungskolben 33 befindliches Hydraulikmittel wird in einer Verfahrrichtung des Druckerhöhungskolbens 33 in Richtung auf das Rücklauf-Ventil 21 verdrängt und damit bei dem dargestellten Ausführungsbeispiel in den Raum "nach" der Durchflussbohrung 25. Es wird also bezogen auf den geschlossenen Zustand des Rücklaufventils 20 in den Raum verdrängt, der gebildet ist durch die Unterfläche 27 und die zugeordnete Seite des Einschraubteils 23 sowie einen Teil des Zylinders, in welchem das Rücklaufventil 21 aufgenommen ist. Es handelt sich um den schon angesprochenen Raum 30, den Ventilraum. Auf diesen Ventilraum wird hierdurch im Sinne einer Verkleinerung eingewirkt. Dies führt zu einer kurzzeitigen Druckerhöhung in dem Raum 30 zur Einwirkung auf die Unterfläche 27 des Rücklaufventils 21. Die zufolge der Beaufschlagung der gegenüber der Querschnittsfläche der Durchflussbohrung 25 im Ventilsitz wesentlich vergrößerten Durchmesserfläche der Unterfläche 27 ist das Anheben des Rücklaufventils 21 durch Aufbau eines Druckes von wenigen bar, beispielsweise 2 bis 5 bar, bereits erreichbar. Dieser Druck wird (zunächst) allein durch die kolbenartige Verlagerung des Druckerhöhungskolbens 33 erreicht.

Insbesondere mit einer solchen Ausgestaltung bei einem hydraulischen Pressgerät lässt sich sehr günstig und schnell auf das beschriebene Erreichen der charakteristischen Änderung als Signal zur Beendigung des bestimmten Arbeitsvorganges reagieren.

Die Ventilnadel 26 wird hierdurch von dem Ventilsitz angehoben, so dass der Rücklauf des Hydraulikmittels aus dem Hydraulik-Zylinder 6 zurück in den Hydrauliktank 4 erfolgen kann, wobei das Rücklaufventil 21 in der angehobenen Stellung solange gehalten werden kann, bis der Hydraulikkolben 7 die Endstellung gemäß Figur 11 erreicht hat und somit der Öffnungshaltedruck für das Rücklaufventil 21 unterschritten ist.

Die Druckerhöhung an dem Rücklaufventil 21 durch den Druckerhöhungskolben 33 wirkt initialartig. Mit Anheben des Rücklaufventils 21 und damit einhergehender Verbindung des Raumes 30 mit der Ablauföffnung 31 bei gleichzeitiger Öffnung der Durchflussbohrung 25 wirkt der durch das Rücklaufen des Hydraulickolbens 7 vorherrschende Druck auf das Rücklaufventil 21.

Auch die elektrische Beaufschlagung des Stellmagneten 36 kann zunächst impulsartig erfolgen, so dass nach vollständigem Vorhub des Druckerhöhungskolbens 33 dieser sich nahezu plötzlich in der vorgefahrenen Stellung gemäß Figur 14 befindet. Bei regelmäßigem Ablauf eines Arbeitszyklus, wenn also insbesondere keine vorzeitige Beendigung des Rücklaufs des Bewegungsteils gewünscht ist, was grundsätzlich mit der beschriebenen Ausgestaltung auch durchführbar ist, verbleibt der Druckerhöhungskolben 33 in dieser Stellung auch solange beaufschlagt.

Durch eine gleichsam vorzeitige, vor vollständiger Zurückbewegung des Hydraulikkolbens, erfolgte Aufhebung der Beaufschlagung des Stellmagneten 36 kann sich der Druckerhöhungskolben 33 entsprechend vorzeitig in seine Ausgangsstellung zurückbewegen. Die hiermit verbundene Vergrößerung des Ventilraumes 30 kann für einen solchen Druckabfall sorgen, dass hierdurch eine gewünschte Schließung des Rücklaufventils 21 erreicht wird. Hiermit kann eine regelmäßig eingestellte oder individuell beispielsweise durch ein gedrückt Halten eines Betätigungsschalters geänderte Anfangsstellung für einen weiteren Arbeitsvorgang herbeigefügt werden.

Mit einer Zurückbewegung des Druckerhöhungskolbens 33 öffnet sich bevorzugt auch zugleich ein Strömungsweg aus dem Hydrauliktank 4 in den Ventilraum 30, um den Ventilraum 30 mit dem benötigten Hydraulikmittel zu versorgen, der die genannte Zurückbewegung des Druckerhöhungskolbens 33 ermöglicht. Sobald das Rücklaufventil 21 wieder geschlossen ist, kann über den Ventilsitz kein Hydraulikmittel mehr in den Raum 30 strömen. Dieser Strömungsweg kann durch ein in dem Ventilkolben und/oder einem Verbindungsweg aus dem Hydrauliktank 4 zu der Leitung 34 angeordneten Rückschlagventil gegeben sein. Auch kann sich mit einer Zurückbewegung des Druckerhöhungskolbens 33 zugleich ein (weiterer) Ablaufweg für Hydraulikmittel in den Hydrauliktank 4, zunächst über einen Leitungsabschnitt 39, der von dem zurückfahrenden Druckerhöhungskolben 33 freigegeben ist, ergeben. Weiter aber auch ergänzend oder alternativ über eine Aufnahme 40 für einen Kolbenschaft 41 des Druckerhöhungskolbens 33. Hierüber und den sich bevorzugt anschließenden erweiterten Raum 42, in welchem sich ein Betätigungskolben 43 des Druckerhöhungskolbens 33 befindet, kann Hydraulikmittel unmittelbar in den Hydrauliktank 4 ablaufen.

Im betätigten Zustand, siehe Figuren 14 und 15, ist auch von Bedeutung, dass eine vordere, hier konusförmig gebildete Fläche des Betätigungskolbens 43 unmittelbar an der zugeordneten Wandung anliegt. Andererseits füllt der Betätigungskolben 43 rückwärtig hierzu den erweiterten Raum 42 nicht vollständig aus. Zufolge einer Abflachung oder dergleichen an einer seiner Seiten verbleibt vielmehr auch in dem bei Betätigung vorgeschobenen Zustand gemäß Figur 14 bzw. Figur 15 ein Freiraum 44 in dem erweiterten Raum 42.

Es kann auch vorgesehen sein, dass eine Vorbewegung des Hydraulik-Kolbens 4 in die Arbeitsstellung nur solange beibehalten wird, wie der Benutzer den Schalter betätigt. In einer Ausgestaltung wird mit Loslassen des Schalters (auch vor einem Erreichen der bestimmten Arbeitskraft) ein Signal generiert, das zu einer Ansteuerung des Stellmagneten 36 und somit über den Druckerhöhungskolben 33 zu einer Druckerhöhung in dem Raum 30 führt. Entsprechend wird mit Loslassen des Schalters das Rücklaufventil 21 in die Öffnungsstellung verlagert, was auch insofern zu einem selbsttätigen Rücklauf des Hydraulikkolbens in die Endstellung führen kann. Ungeachtet dessen kann aber bei durchgehendem gedrückt Halten des Schalters die genannte Beendigung des bestimmten Arbeitsvorganges bei Erreichen der charakteristischen Änderung in dem Gerätewert vorgesehen sein.

Der Druckerhöhungskolben 33 kann quergerichtet angeordnet sein zu dem Rücklaufventil 21. Die Längsachsen des Druckerhöhungskolbens 33 und des Rücklaufventils 21 schneiden sich bevorzugt außerhalb der jeweiligen Erstreckungsbereiche. Dies unterstützt eine gewünschte kompakte Bauweise.

Zudem kann vorgesehen sein, wie auch beim Ausführungsbeispiel dargestellt, dass der Stellmagnet 36 bzw. der diesbezügliche Bauabschnitt durch Hineinragen in den Hydrauliktank 4 vom Hydraulikmittel umspült ist.

### Liste der Bezugszeichen

- 1: hydraulisches Hand-Pressgerät
- 2: Handgriff
- 3: Akkumulator
- 4: Hydrauliktank
- 5: Pumpe
- 6: Hydraulikzylinder
- 7: Hydraulikkolben
- 8: Rückstellfeder
- 9: bewegliche Pressbacke
- 10: feststehende Pressbacke
- 11: Elektromotor
- 12: Pressraum
- 13: Pressling
- 14: Datenverarbeitungseinrichtung
- 15: Sensor
- 16: Sensor
- 17: Schalter
- 18: Schneidling
- 19: Steuereinrichtung
- 20: Rücklaufleitung
- 21: Rücklaufventil
- 22: Andruckfeder
- 23: Einschraubteil
- 24: Gewinde
- 25: Durchflussbohrung
- 26: Ventilnadel
- 27: Unterfläche
- 28: Rücklaufventil-Kolben
- 29: Feder
- 30: Ventil-Raum
- 31: Ablauföffnung
- 32: Axialbohrung
- 33: Druckerhöhungskolben
- 34: Leitung
- 35: Hydraulikmittel-Zylinder
- 36: Stellmagnet
- 37: Rückstellfeder
- 38: Bohrungen
- 39: Leitungsabschnitt
- 40: Aufnahme
- 41: Kolbenschaft
- 42: Raum
- 43: Betätigungskolben

- A: Punkt
- B: Punkt
- H: Stufenhöhe
- h: Stufenhöhe
- L₁: Linie
- L₁': Linie
- S: Steigung
- S': Steigung
- S₁: Steigung
- S₁': Steigung
- S₂: Steigung
- S₂': Steigung

## Patentansprüche

1. Verfahren zum Betrieb eines motorisch betätigten Arbeitsgerätes, wobei ein bestimmter Arbeitsvorgang einen Anstieg einer aufgebrachten Kraft auf eine bestimmte Arbeitskraft erfordert, nach deren Erreichen der bestimmte Arbeitsvorgang keine höhere Kraft mehr erfordert und sich eine charakteristische Änderung bei einem Gerätewert wie einem Motorstrom oder einem Druckanstieg in einem zur Aufbringung der Kraft genutzten Hydraulikmittel ergibt, wobei weiter das Arbeitsgerät einen Anstieg der Kraft auf eine die bestimmte Arbeitskraft übersteigende allgemeine Arbeitskraft ermöglicht und eine Einrichtung zur Überwachung des Gerätewertes vorgesehen ist, **dadurch gekennzeichnet, dass** bei dem bestimmten Arbeitsvorgang eine Auswertung im Hinblick auf eine Erfassung der charakteristischen Änderung vorgenommen wird und dass das Erreichen der charakteristischen Änderung als Signal zur Beendigung des bestimmten Arbeitsvorganges nach Erreichen der bestimmten Arbeitskraft, aber vor Erreichen der allgemeinen Arbeitskraft genutzt wird, und dass ein einfaches oder mehrfaches Erreichen der allgemeinen Arbeitskraft einen Hinweis für einen Benutzer auslöst und/oder ein Außer-Betrieb-Setzen des Arbeitsgerätes auslöst.

2. Verfahren zum Betrieb eines motorisch betätigten Arbeitsgerätes, wobei ein bestimmter Arbeitsvorgang einen Anstieg einer aufgebrachten Kraft auf eine bestimmte Arbeitskraft erfordert, nach deren Erreichen der bestimmte Arbeitsvorgang keine höhere Kraft mehr erfordert und sich eine charakteristische Änderung bei einem Gerätewert wie einem Motorstrom oder einem Druckanstieg in einem zur Aufbringung der Kraft genutzten Hydraulikmittel ergibt, wobei weiter das Arbeitsgerät einen Anstieg der Kraft auf eine die bestimmte Arbeitskraft übersteigende allgemeine Arbeitskraft ermöglicht und eine Einrichtung zur Überwachung des Gerätewertes vorgesehen ist, **dadurch gekennzeichnet, dass** bei dem bestimmten Arbeitsvorgang eine Auswertung im Hinblick auf eine Erfassung der charakteristischen Änderung vorgenommen wird und dass das Erreichen der charakteristischen Änderung als Signal zur Beendigung des bestimmten Arbeitsvorganges nach Erreichen der bestimmten Arbeitskraft, aber vor Erreichen der allgemeinen Arbeitskraft genutzt wird, wobei weiter als Gerätewert eine einzelne Druckstufe einer bestimmten Höhe zur Beendigung des Arbeitsvorganges herangezogen wird.

3. Verfahren zum Betrieb eines motorisch betätigten Schneidgerätes mit Scherenteilen oder eines Stanzgerätes, wobei ein bestimmter Arbeitsvorgang einen Anstieg einer aufgebrachten Kraft auf eine bestimmte Arbeitskraft erfordert, nach deren Erreichen der bestimmte Arbeitsvorgang keine höhere Kraft mehr erfordert und sich eine charakteristische Änderung bei einem Gerätewert wie einem Motorstrom oder einem Druckanstieg in einem zur Aufbringung der Kraft genutzten Hydraulikmittel ergibt, wobei weiter das Arbeitsgerät einen Anstieg der Kraft auf eine die bestimmte Arbeitskraft übersteigende allgemeine Arbeitskraft ermöglicht, eine Einrichtung zur Überwachung des Gerätewertes vorgesehen ist, und bei dem bestimmten Arbeitsvorgang eine Auswertung im Hinblick auf eine Erfassung der charakteristischen Änderung vorgenommen wird, **dadurch gekennzeichnet, dass** das Erreichen der charakteristischen Änderung als Signal zur Beendigung des bestimmten Arbeitsvorganges nach Erreichen der bestimmten Arbeitskraft, aber vor Erreichen der allgemeinen Arbeitskraft genutzt wird, wobei nach einem Erreichen der bestimmten Arbeitskraft die Teile, im Falle eines Schneidgerätes die Scherenteile, bis zum Erfassen der charakteristischen Änderung weiterbewegt werden oder dass ein Übergang zu einem zeitlich raschen Abfall der Arbeitskraft oder ein analoger Abfall des Motorstroms als charakteristische Änderung herangezogen wird.

4. Verfahren zum Betrieb eines motorisch betätigten Arbeitsgerätes, wobei ein bestimmter Arbeitsvorgang einen Anstieg einer aufgebrachten Kraft auf eine bestimmte Arbeitskraft erfordert, nach deren Erreichen der bestimmte Arbeitsvorgang keine höhere Kraft mehr erfordert und sich eine charakteristische Änderung bei einem Gerätewert, der ein Motorstrom oder ein Druckanstieg ist, in einem zur Aufbringung der Kraft genutzten Hydraulikmittel ergibt, wobei weiter das Arbeitsgerät einen Anstieg der Kraft auf eine die bestimmte Arbeitskraft übersteigende allgemeine Arbeitskraft ermöglicht und eine Einrichtung zur Überwachung des Gerätewertes vorgesehen ist, wobei ein Sensor zur Erfassung des Motorstroms des Elektromotors vorgesehen ist und/oder ein Sensor zur Erfassung des Druckes in dem Hydraulikmittel, dass der Sensor für den Motorstrom und/oder der Sensor für den hydraulischen Druck jeweils Messwerte in sehr kurzen Zeitabständen unterhalb von einer Zehntel-Sekunde liefert, dass bei dem bestimmten Arbeitsvorgang eine Auswertung im Hinblick auf eine Erfassung der charakteristischen Änderung vorgenommen wird und dass das Erreichen der charakteristischen Änderung als Signal zur Beendigung des bestimmten Arbeitsvorganges nach Erreichen der bestimmten Arbeitskraft, aber vor Erreichen der allgemeinen Arbeitskraft genutzt wird und dass die Beendigung des bestimmten Arbeitsvorganges sogleich beim Erfassen der charakteristischen Änderung vorgenommen wird.

5. Motorisch betätigbares Arbeitsgerät, bei welchem ein bestimmter Arbeitsvorgang einen Anstieg einer aufgebrachten Kraft auf eine bestimmte Arbeitskraft erfordert und nach deren Erreichen der bestimmte Arbeitsvorgang keine höhere Kraft mehr erfordert, und bei welchem sich weiter nach Erreichen der bestimmten Arbeitskraft eine charakteristische Änderung bei einem Gerätewert wie einem Motorstrom oder einem Druckanstieg in einem zur Aufbringung der Kraft genutzten Hydraulikmittel ergibt, wobei weiter das Arbeitsgerät einen Anstieg der Kraft auf eine die bestimmte Arbeitskraft übersteigende allgemeine Arbeitskraft ermöglicht und eine Einrichtung zur Überwachung des Gerätewertes vorgesehen ist, wobei weiter bei dem bestimmten Arbeitsvorgang eine Auswertung im Hinblick auf eine Erfassung der charakteristischen Änderung bei einem Erreichen der bestimmten Arbeitskraft vornehmbar ist und **dadurch gekennzeichnet dass** das Erfassen der charakteristischen Änderung als Signal zur Beendigung des bestimmten Arbeitsvorganges nach Erreichen der bestimmten Arbeitskraft, aber vor Erreichen der allgemeinen Arbeitskraft nutzbar ist, wobei ein ein- oder mehrfaches Erreichen der allgemeinen Arbeitskraft einen Hinweis für einen Benutzer auslöst und/oder ein Außer-Betrieb-Setzen des Arbeitsgerätes auslöst.

6. Motorisch betätigbares Arbeitsgerät, bei welchem ein bestimmter Arbeitsvorgang einen Anstieg einer aufgebrachten Kraft auf eine bestimmte Arbeitskraft erfordert und nach deren Erreichen der bestimmte Arbeitsvorgang keine höhere Kraft mehr erfordert, und bei welchem sich weiter nach Erreichen der bestimmten Arbeitskraft eine charakteristische Änderung bei einem Gerätewert wie einem Motorstrom oder einem Druckanstieg in einem zur Aufbringung der Kraft genutzten Hydraulikmittel ergibt, wobei weiter das Arbeitsgerät einen Anstieg der Kraft auf eine die bestimmte Arbeitskraft übersteigende allgemeine Arbeitskraft ermöglicht und eine Einrichtung zur Überwachung des Gerätewertes vorgesehen ist, **dadurch gekennzeichnet, dass** weiter bei dem bestimmten Arbeitsvorgang eine Auswertung im Hinblick auf eine Erfassung der charakteristischen Änderung bei einem Erreichen der bestimmten Arbeitskraft vornehmbar ist und das Erfassen der charakteristischen Änderung als Signal zur Beendigung des bestimmten Arbeitsvorganges nach Erreichen der bestimmten Arbeitskraft, aber vor Erreichen der allgemeinen Arbeitskraft nutzbar ist, wobei als Gerätewert eine einzelne Druckstufe einer bestimmten Höhe zur Beendigung des Arbeitsvorganges heranziehbar ist.

7. Motorisch betätigbares Schneidgerät mit Scherenteilen oder motorisch betätigbares Stanzgerät, wobei ein bestimmter Arbeitsvorgang einen Anstieg einer aufgebrachten Kraft auf eine bestimmte Arbeitskraft erfordert nach deren Erreichen der bestimmte Arbeitsvorgang keine höhere Kraft mehr erfordert, und eine charakteristische Änderung bei einem Gerätewert wie einem Motorstrom oder einem Druckanstieg in einem zur Aufbringung der Kraft genutzten Hydraulikmittel ergibt, wobei weiter das Schneidgerät oder das Stanzgerät einen Anstieg der Kraft auf eine die bestimmte Arbeitskraft übersteigende allgemeine Arbeitskraft ermöglicht, eine Einrichtung zur Überwachung des Gerätewertes vorgesehen ist, und bei dem bestimmten Arbeitsvorgang eine Auswertung im Hinblick auf eine Erfassung der charakteristischen Änderung vornehmbar ist, **dadurch gekennzeichnet, dass** das Erreichen der charakteristischen Änderung als Signal zur Beendigung des bestimmten Arbeitsvorganges nach Erreichen der bestimmten Arbeitskraft, aber vor Erreichen der allgemeinen Arbeitskraft nutzbar ist, und wobei nach einem Erreichen der bestimmten Arbeitskraft die Teile, im Falle eines Schneidgerätes die Scherenteile, bis zum Erfassen der charakteristischen Änderung weiter bewegbar sind oder dass ein Übergang zu einem zeitlich raschen Abfall der Arbeitskraft oder ein analoger Abfall des Motorstroms als charakteristische Änderung heranziehbar ist.

8. Motorisch betätigbares Arbeitsgerät, bei welchem ein bestimmter Arbeitsvorgang einen Anstieg einer aufgebrachten Kraft auf eine bestimmte Arbeitskraft erfordert und nach deren Erreichen der bestimmte Arbeitsvorgang keine höhere Kraft mehr erfordert, und bei welchem sich weiter nach Erreichen der bestimmten Arbeitskraft eine charakteristische Änderung bei einem Gerätewert wie einem Motorstrom oder einem Druckanstieg in einem zur Aufbringung der Kraft genutzten Hydraulikmittel ergibt, wobei weiter das Arbeitsgerät einen Anstieg der Kraft auf eine die bestimmte Arbeitskraft übersteigende allgemeine Arbeitskraft ermöglicht, und eine Einrichtung zur Überwachung des Gerätewertes vorgesehen ist, wobei bei dem bestimmten Arbeitsvorgang eine Auswertung im Hinblick auf eine Erfassung der charakteristischen Änderung bei einem Erreichen der bestimmten Arbeitskraft vornehmbar ist, und das Erfassen der charakteristischen Änderung als Signal zur Beendigung des bestimmten Arbeitsvorganges nach Erreichen der bestimmten Arbeitskraft, aber vor Erreichen der allgemeinen Arbeitskraft nutzbar ist, wobei ein Sensor (15) zur Erfassung des Motorstroms des Elektromotors (11) und/oder ein Sensor (16) zur Erfassung eines Druckes in dem Hydraulikmittel vorgesehen ist, wobei der Sensor (15) für den Motorstrom und/oder der Sensor (16) für den hydraulischen Druck Messwerte in sehr kurzen Zeitabständen unterhalb von einer Zehntel-Sekunde liefert und dass die Beendigung des bestimmten Arbeitsvorganges sogleich beim Erfassen der charakteristischen Änderung vornehmbar ist.

9. Verfahren zum Betrieb eines Arbeitsgerätes nach einem der Ansprüche 1 - 4, **dadurch gekennzeichnet, dass** der Gerätewert ein Druck in einem Hydraulikmittel ist.

10. Verfahren zum Betrieb eines Arbeitsgerätes nach einem der Ansprüche 1 oder 3, **dadurch gekennzeichnet, dass** der Gerätewert eine Höhe eines Motorstromes eines Elektromotors ist.

11. Verfahren zum Betrieb eines Arbeitsgerätes nach einem der Ansprüche 1, 3 oder 4, **dadurch gekennzeichnet, dass** der Gerätewert eine Steigung einer beispielsweise Druck- oder Stromkurve ist.

12. Verfahren zum Betrieb eines Arbeitsgerätes nach Anspruch 1 oder einem der Ansprüche 3 bis 6, **dadurch gekennzeichnet, dass** die Beendigung des bestimmten Arbeitsvorganges sogleich beim Erfassen der charakteristischen Änderung vorgenommen wird bzw. erfolgt.

13. Arbeitsgerät nach Anspruch 2, **dadurch gekennzeichnet, dass** der Gerätewert ein Druck in einem Hydraulikmittel ist.

14. Arbeitsgerät nach Anspruch 2 oder 9, **dadurch gekennzeichnet, dass** der Gerätewert eine Höhe eines Motorstromes eines Elektromotors ist.

15. Arbeitsgerät nach Anspruch 2 oder einem der Ansprüche 9, 10, **dadurch gekennzeichnet, dass** der Gerätewert eine Steigung einer beispielsweise Druck- oder Stromkurve ist.

## Claims

1. A method for operating a motor-actuated working device, wherein a certain working operation requires a rise of an applied force to a certain working force, after the attainment of which the certain working operation no longer requires a higher force and a characteristic change in a device value such as a motor current or a pressure rise in a hydraulic medium utilised for applying the force results, wherein furthermore the working device makes possible a rise of the force to a general working force exceeding the certain working force and an apparatus for monitoring the device value is provided, **characterized in that** during the certain working operation an evaluation with regard to a detection of the characteristic change is carried out and **in that** the attainment of the characteristic change is utilised as signal for terminating the certain working operation after the attainment of the certain working force, but before the attainment of the general working force, and **in that** a single or a multiple attainment of the general working force triggers a notification for a user and/or triggers a switching-off of the working device.

2. A method for the operation of a motor-actuated working device, wherein a certain working operation requires a rise of an applied force to a certain working force, after the attainment of which the certain working operation no longer requires a higher force and a characteristic change in a device value such as a motor current or a pressure rise in a hydraulic medium utilised for applying the force results, wherein furthermore the working device makes possible a rise of the force to a general working force exceeding the certain working force and an apparatus for monitoring the device value is provided, **characterized in that** during the certain working operation an evaluation with regard to a detection of the characteristic change is carried out and **in that** the attainment of the characteristic change is utilised as signal for terminating the certain working operation after the attainment of the certain working force but before the attainment of the general working force, wherein, furthermore, as device value an individual pressure stage of a certain amount is utilised for terminating the working operation.

3. A method for the operation of a motor-actuated cutting device with shear parts or of a stamping device, wherein a certain working operation requires a rise of an applied force to a certain working force, following the attainment of which the certain working operation no longer requires a higher force and a characteristic change in a device value such as a motor current or a pressure rise in a hydraulic medium utilised for applying the force results, wherein furthermore the working device makes possible a rise of the force to a general working force exceeding the certain working force, an apparatus for monitoring the device value is provided, and during the certain working operation an evaluation with regard to a detection of the characteristic change is carried out, **characterized in that** the attainment of the characteristic change is utilised as signal for terminating the certain working operation after the attainment of the certain working force but before the attainment of the general working force, wherein after an attainment of the certain working force the parts, in the case of a cutting device, the shear parts, are moved further pending the detection of the characteristic change or **in that** a transition to a rapid drop of the working force or an analogous drop of the motor current is utilised as characteristic change.

4. A method for the operation of a motor-actuated working device, wherein a certain working operation requires a rise of an applied force to a certain working force, following the attainment of which the certain working operation no longer requires a higher force and a characteristic change in a device value, which is a motor current or a pressure rise, results in a hydraulic medium utilised for applying the force, wherein furthermore the working device makes possible a rise of the force to a general working force exceeding the certain working force and an apparatus for monitoring the device value is provided, wherein a sensor for the detection of the motor current of the electric motor is provided and/or a sensor for the detection of the pressure in the hydraulic medium, in that the sensor for the motor current and/or the sensor for the hydraulic pressure each supplies measurement values in very short time intervals under a tenth of a second, in that during the certain working operation an evaluation with regard to a detection of the characteristic change is performed and in that the attainment of the characteristic change is utilised as signal for terminating the certain working operation after the attainment of the certain working force, but before the attainment of the general working force and in that the termination of the certain working operation is immediately carried out when the characteristic change is detected.

5. A motor-actuatable working device, with which a certain working operation requires a rise of an applied force to a certain working force and following the attainment of which the certain working operation no longer requires a higher force, and with which furthermore after the attainment of the certain working force a characteristic change in a device value such as a motor current or a pressure rise in a hydraulic medium utilised for applying the force results, wherein furthermore the working device makes possible a rise of the force to a general working force exceeding the certain working force and an apparatus for monitoring the device value is provided, wherein furthermore during the certain working operation an evaluation with regard to a detection of the characteristic change upon an attainment of the certain working force can be carried out and **characterized in that** the detection of the characteristic change can be utilised as signal for terminating the certain working operation after the attainment of the certain working force, but before the attainment of the general working force, wherein a single or multiple attainment of the general working force triggers a notification for a user and/or triggers a switching-off of the working device.

6. A motor-actuatable working device, in which a certain working operation requires a rise of an applied force to a certain working force and after the attainment of which the certain working operation no longer requires a higher force, and with which, furthermore, after the attainment of the certain working force a characteristic change in a device value such as a motor current or a pressure rise in a hydraulic medium utilised for applying the force results, wherein furthermore the working device makes possible an rise of the force to a general working force exceeding the certain working force and an apparatus for monitoring the device value is provided, **characterized in that** furthermore during the certain working operation an evaluation with regard to a detection of the characteristic change upon an attainment of the certain working force can be carried out and the detection of the characteristic change can be utilised as signal for terminating the certain working operation after the attainment of the certain working force but before the attainment of the general working force, wherein as device value an individual pressure stage of a certain amount can be utilised for terminating the working operation.

7. A motor-actuatable cutting device with shear parts or a motor-actuatable stamping device, wherein a certain working operation requires a rise of an applied force to a certain working force after the attainment of which the certain working operation no longer requires a higher force, and in the case of which furthermore after the attainment of a certain working force a characteristic change in a device value such as a motor current or a pressure rise in a hydraulic medium utilised for applying the force results, wherein furthermore the cutting device or the stamping device makes possible a rise of the force to a general working force exceeding the certain working force, an apparatus for monitoring the device value is provided, and during the certain working operation an evaluation with regard to a detection of the characteristic change can be carried out, **characterized in that** the attainment of the characteristic change can be utilised as signal for terminating the certain working operation after the attainment of the certain working force but before the attainment of the general working force, wherein after an attainment of the certain working force the parts, in the case of a cutting device, the shear parts up to the detection of the characteristic change can be moved further or **in that** a transition to a rapid drop of the working force or an analogous drop of the motor current are utilisable as characteristic change.

8. The motor-actuatable working device, in which a certain working operation requires a rise of an applied force to a certain working force and after the attainment of which the certain working operation no longer requires a higher force, and in which, furthermore, after the attainment of the certain working force a characteristic change in a device value such as a motor current or a pressure rise in a hydraulic medium utilised for applying the force results, wherein furthermore the working device makes possible a rise of the force to a general working force exceeding the certain working force, and an apparatus for monitoring the device value, wherein during the certain working operation an evaluation with regard to a detection of the characteristic change on an attainment of the certain working force can be carried out, and the detection of the characteristic change can be utilised as signal for terminating the certain working operation after the attainment of the certain working force, but before the attainment of the general working force, wherein a sensor (15) for the detection of the motor current of the electric motor (11) and/or a sensor (16) for the detection of a pressure in the hydraulic medium is provided, wherein the sensor (15) for the motor current and/or the sensor (16) for the hydraulic pressure supply/s measurement values at very short time intervals below a tenth of a second and in that the termination of the certain working operation can be carried out immediately during the detection of the characteristic change.

9. Method for operating a working device according to any one of the claims 1 - 4, **characterized in that** the device value is a pressure in a hydraulic medium.

10. Method for operating a working device according to any one of the claims 1 or 3, **characterized in that** the device value is an amount of a motor current of an electric motor.

11. Method for operating a working device according to any one of the claims 1, 3 or 4, **characterized in that** the device value is a gradient of a for example pressure or current curve.

12. Method for operating a working device according to claim 1 or any one of the claims 3 to 6, **characterized in that** the termination of the certain working operation is carried out or takes place immediately when the characteristic change is detected.

13. Working device according to claim 2, **characterized in that** the device value is a pressure in a hydraulic medium.

14. Working device according to claim 2 or 9, **characterized in that** the device value is an amount of a motor current of an electric motor.

15. Working device according to claim 2 or any one of the claims 9, 10, **characterized in that** the device value is a gradient of a for example pressure or current curve.

## Revendications

1. Procédé pour faire fonctionner un outil de travail motorisé, dans lequel une opération de travail spécifique nécessite une augmentation de la force appliquée à une force de travail spécifique, après quoi l'opération de travail spécifique ne nécessite plus une force plus élevée, et une modification caractéristique se produit dans une valeur de l'outil telle qu'un courant de moteur ou une augmentation de la pression dans un fluide hydraulique utilisé pour appliquer la force, dans lequel, en outre, l'outil de travail permet une augmentation de la force à une force de travail générale dépassant la force de travail spécifique, et un dispositif est prévu pour le contrôle de la valeur de l'outil, **caractérisé en ce qu'**une évaluation est effectuée pendant l'opération de travail spécifique dans l'optique d'une détection de la modification caractéristique, et **en ce que** l'atteinte de la modification caractéristique est utilisée comme signal pour mettre fin à l'opération de travail spécifique après avoir atteint la force de travail spécifique mais avant d'atteindre la force de travail générale, et **en ce qu'**une atteinte unique ou multiple de la force de travail générale déclenche une indication pour un utilisateur et/ou déclenche une mise hors service de l'outil de travail.

2. Procédé pour faire fonctionner un outil de travail motorisé, dans lequel une opération de travail spécifique nécessite une augmentation de la force appliquée à une force de travail spécifique, après quoi l'opération de travail spécifique ne nécessite plus une force plus élevée, et une modification caractéristique se produit dans une valeur de l'outil telle qu'un courant de moteur ou une augmentation de la pression dans un fluide hydraulique utilisé pour appliquer la force, dans lequel en outre l'outil de travail permet une augmentation de la force à une force de travail générale dépassant la force de travail spécifique, et un dispositif est prévu pour le contrôle de la valeur de l'outil, **caractérisé en ce qu'**une évaluation est effectuée pendant l'opération de travail spécifique dans l'optique d'une détection de la modification caractéristique et **en ce que** l'atteinte de la modification caractéristique est utilisée comme signal pour mettre fin à l'opération de travail spécifique après que la force de travail spécifique a été atteinte mais avant que la force de travail générale ait été atteinte, dans lequel en outre un seuil de pression unique d'un niveau spécifique est utilisé comme valeur de l'outil pour mettre fin à l'opération de travail.

3. Procédé pour faire fonctionner un outil de coupe motorisé avec des pièces de ciseaux ou un outil de découpage ou poinçonnage, dans lequel une opération de travail spécifique nécessite une augmentation d'une force appliquée à une force de travail spécifique, après quoi l'opération de travail spécifique ne nécessite plus une force plus élevée et une modification caractéristique se produit dans une valeur de l'outil telle qu'un courant de moteur ou une augmentation de pression dans un fluide hydraulique utilisé pour appliquer la force, dans lequel, en outre, l'outil de travail permet une augmentation de la force à une force de travail générale dépassant la force de travail spécifique et un dispositif est prévu pour le contrôle de la valeur de l'outil, et une évaluation est effectuée pendant l'opération de travail spécifique dans l'optique d'une détection de la modification caractéristique, **caractérisé en ce que** l'atteinte de la modification caractéristique est utilisée comme signal pour mettre fin à l'opération de travail spécifique après que la force de travail spécifique a été atteinte mais avant que la force de travail générale ait été atteinte, dans lequel les pièces, les pièces de ciseaux dans le cas d'un outil de coupe, sont déplacées plus loin après que la force de travail spécifique a été atteinte jusqu'à ce que la modification caractéristique soit détectée, ou **en ce qu'**une transition vers une chute temporellement rapide de la force de travail ou une chute analogue du courant du moteur est utilisée comme modification caractéristique.

4. Procédé pour faire fonctionner un outil de travail motorisé, dans lequel une opération spécifique nécessite une augmentation d'une force appliquée à une force de travail spécifique, après quoi l'opération spécifique ne nécessite plus une force plus élevée, et une modification caractéristique se produit dans une valeur de l'outil qui est un courant de moteur ou une augmentation de la pression dans un fluide hydraulique utilisé pour appliquer la force, dans lequel, en outre, l'outil de travail permet une augmentation de la force jusqu'à une force de travail générale dépassant la force de travail spécifique et un dispositif est prévu pour le contrôle de la valeur de l'outil, dans lequel un capteur pour détecter le courant du moteur électrique est prévu et/ou un capteur pour détecter la pression dans le fluide hydraulique, que le capteur de courant du moteur et/ou le capteur de pression hydraulique fournissent des valeurs de mesure à des intervalles de temps très courts, inférieurs à un dixième de seconde, qu'une évaluation est effectuée pendant l'opération de travail spécifique dans l'optique d'une détection de la modification caractéristique et que l'atteinte de la modification caractéristique est utilisée comme signal pour mettre fin à l'opération de travail spécifique après que la force de travail spécifique a été atteinte mais avant que la force de travail générale ait été atteinte, et qu'il est entrepris de mettre fin à l'opération de travail spécifique dès la détection de la modification caractéristique.

5. Outil de travail motorisé dans lequel une opération de travail spécifique nécessite une augmentation de la force appliquée à une force de travail spécifique et dans lequel, après avoir atteint la force de travail spécifique, l'opération de travail spécifique ne nécessite plus une force plus élevée et dans lequel, en outre, après avoir atteint la force de travail spécifique, une modification caractéristique se produit dans une valeur de l'outil telle qu'un courant de moteur ou une augmentation de la pression dans un fluide hydraulique utilisé pour appliquer la force, dans lequel l'outil de travail permet en outre une augmentation de la force jusqu'à une force de travail générale dépassant la force de travail spécifique et un dispositif est prévu pour le contrôle de la valeur de l'outil, dans lequel en outre une évaluation peut être effectuée pendant l'opération de travail spécifique dans l'optique d'une détection de la modification caractéristique lorsque la force de travail spécifique est atteinte et **caractérisé en ce que** la détection de la modification caractéristique peut être utilisée comme un signal pour mettre fin à l'opération de travail spécifique après avoir atteint la force de travail spécifique mais avant d'atteindre la force de travail générale, dans lequel une atteinte unique ou multiple de la force de travail générale déclenche une indication pour un utilisateur et/ou déclenche une mise hors service de l'outil de travail.

6. Outil de travail motorisé, dans lequel une opération de travail spécifique nécessite une augmentation de la force appliquée à une force de travail spécifique et, après avoir atteint la force de travail spécifique, l'opération de travail spécifique ne nécessite plus une force plus élevée et dans lequel, en outre, après avoir atteint la force de travail spécifique, une modification caractéristique se produit dans une valeur de l'outil telle qu'un courant de moteur ou une augmentation de la pression dans un fluide hydraulique utilisé pour appliquer la force, dans lequel, en outre, l'outil de travail permet une augmentation de la force à une force de travail générale dépassant la force de travail spécifique et un dispositif est prévu pour le contrôle de la valeur de l'outil, **caractérisé en ce que**, en outre, une évaluation peut être effectuée pendant l'opération de travail spécifique dans l'optique d'une détection de la modification caractéristique lorsque la force de travail spécifique est atteinte, et la détection de la modification caractéristique peut être utilisée comme signal pour mettre fin à l'opération de travail spécifique après que la force de travail spécifique a été atteinte mais avant que la force de travail générale ne soit atteinte, dans lequel un seuil de pression unique d'un niveau spécifique peut être utilisé comme valeur de l'outil pour mettre fin à l'opération de travail.

7. Outil de coupe motorisé avec des pièces de ciseaux ou outil de poinçonnage ou découpage motorisé, dans lequel une opération spécifique nécessite une augmentation d'une force appliquée à une force de travail spécifique, après quoi l'opération spécifique ne nécessite plus une force plus élevée, et une modification caractéristique se produit dans une valeur de l'outil telle qu'un courant de moteur ou une augmentation de la pression dans un fluide hydraulique utilisé pour appliquer la force, dans lequel, en outre, l'outil de coupe ou l'outil de poinçonnage ou découpage permet d'augmenter la force jusqu'à une force de travail générale dépassant la force de travail spécifique, un dispositif est prévu pour le contrôle de la valeur de l'outil et une évaluation peut être effectuée pendant l'opération de travail spécifique dans l'optique d'une détection de la modification caractéristique, **caractérisé en ce que** l'atteinte de la modification caractéristique peut être utilisée comme signal pour mettre fin à l'opération de travail spécifique après avoir atteint la force de travail spécifique mais avant d'atteindre la force de travail générale, dans lequel, après avoir atteint la force de travail spécifique, les pièces, les pièces de ciseaux dans le cas d'un outil de coupe, peuvent être déplacées plus loin jusqu'à ce que la modification caractéristique soit détectée ou **en ce qu'**une transition vers une chute temporellement rapide de la force de travail ou une chute analogue du courant du moteur puisse être utilisée comme modification caractéristique.

8. Outil de travail motorisé dans lequel une opération de travail spécifique nécessite une augmentation de la force appliquée à une force de travail spécifique et après avoir atteint la force de travail spécifique, l'opération de travail spécifique ne nécessite plus une force plus élevée et dans lequel, en outre, après avoir atteint la force de travail spécifique, une modification caractéristique se produit dans une valeur de l'outil telle qu'un courant de moteur ou une augmentation de la pression dans un fluide hydraulique utilisé pour appliquer la force, dans lequel, en outre, l'outil de travail permet une augmentation de la force à une force de travail générale dépassant la force de travail spécifique, et un dispositif est prévu pour le contrôle de la valeur de l'outil, dans lequel une évaluation peut être effectuée pendant l'opération de travail spécifique dans l'optique d'une détection de la modification caractéristique lorsque la force de travail spécifique est atteinte et la détection de la modification caractéristique peut être utilisée comme signal pour mettre fin à l'opération de travail spécifique après que la force de travail spécifique a été atteinte mais avant que la force de travail générale ne soit atteinte, dans lequel il est prévu un capteur (15) pour la détection du courant de moteur du moteur électrique (11) et/ou un capteur (16) pour la détection d'une pression dans le fluide hydraulique, dans lequel le capteur (15) pour le courant de moteur et/ou le capteur (16) pour la pression hydraulique fournit des valeurs de mesure à des intervalles de temps très courts, inférieurs à un dixième de seconde, et en ce qu'il peut être entrepris de mettre fin à l'opération de travail spécifique dès la détection de la modification caractéristique.

9. Procédé de fonctionnement d'un outil de travail selon l'une des revendications 1 à 4, **caractérisé en ce que** la valeur de l'outil est une pression dans un fluide hydraulique.

10. Procédé pour faire fonctionner un outil de travail selon l'une des revendications 1 ou 3, **caractérisé en ce que** la valeur de l'outil est une valeur d'un courant de moteur d'un moteur électrique.

11. Procédé pour faire fonctionner un outil de travail selon l'une des revendications 1, 3 ou 4, **caractérisé en ce que** la valeur de l'outil est une pente d'une courbe par exemple de pression ou de courant.

12. Procédé pour faire fonctionner un outil de travail selon la revendication 1 ou l'une des revendications 3 à 6, **caractérisé en ce qu'**il est entrepris de mettre fin à l'opération de travail spécifique ou que la fin de celle-ci se produit dès la détection de la modification caractéristique.

13. Outil de travail selon la revendication 2, **caractérisé en ce que** la valeur de l'outil est une pression dans un fluide hydraulique.

14. Outil de travail selon la revendication 2 ou 9, **caractérisé en ce que** la valeur de l'outil est une valeur d'un courant de moteur d'un moteur électrique.

15. Outil de travail selon la revendication 2 ou l'une des revendications 9, 10, **caractérisé en ce que** la valeur de l'outil est une pente d'une courbe par exemple de pression ou de courant.
